# EUROPEAN PATENT SPECIFICATION

(11) **EP 4 026 770 B1**
(45) Date of publication and mention of the grant of the patent: **09.12.2026**
(21) Application number: 20873949.0
(22) Date of filing: 01.09.2020
(51) Int. Cl.: G08G 5/21, G05D 1/00, B64D 45/08, B64C 27/04, B64C 29/00, B64D 47/08, G08G 5/54, G08G 5/74

(54) **AUTOMATIC LANDING SYSTEM FOR VERTICAL TAKEOFF/LANDING AIRCRAFT, VERTICAL TAKEOFF/LANDING AIRCRAFT, AND CONTROL METHOD FOR LANDING OF VERTICAL TAKEOFF/LANDING AIRCRAFT**
AUTOMATISCHES LANDESYSTEM FÜR VERTIKAL STARTENDES UND LANDENDES FLUGZEUG, VERTIKAL STARTENDES UND LANDENDES FLUGZEUG UND STEUERVERFAHREN ZUR LANDUNG EINES VERTIKAL STARTENDEN UND LANDENDEN FLUGZEUGS
SYSTÈME D'ATTERRISSAGE AUTOMATIQUE POUR AÉRONEF À DÉCOLLAGE/ATTERRISSAGE VERTICAL, AÉRONEF À DÉCOLLAGE/ATTERRISSAGE VERTICAL ET PROCÉDÉ DE COMMANDE POUR L'ATTERRISSAGE D'UN AÉRONEF À DÉCOLLAGE/ATTERRISSAGE VERTICAL

(30) Priority: 11.10.2019 JP 2019187986
(43) Date of publication of application: 13.07.2022
(73) Proprietor: Mitsubishi Heavy Industries, Ltd., 100-8332 Tokyo (JP)
(72) Inventor: KOJIMA, Toru, Tokyo 100-8332 (JP); HASHIMOTO, Masahiro, Tokyo 100-8332 (JP)
(74) Representative: Hoffmann Eitle
(86) International application number: PCT/JP2020/033016
(87) International publication number: WO 2021/070517

(56) References cited:
- WO-A1-2018/064657
- WO-A1-2019/175992
- CN-B- 104 932 522
- JP-A- 2012 071 645
- JP-A- 2017 503 226
- JP-A- 2018 129 063
- JP-A- 2018 510 425
- US-A1- 2005 125 142
- US-A1- 2016 122 038
- US-A1- 2017 225 800
- US-B2- 8 626 364

## Description

### Technical Field

The present invention relates to an automatic landing system for a vertical take-off and landing aircraft, a vertical take-off and landing aircraft, and a landing control method for a vertical take-off and landing aircraft.

### Background Art

In the past, techniques for guiding a vertical take-off and landing aircraft to a target location have been known. For example, JP 2012-071645 A discloses an automatic take-off and landing system configured to calculate a positional relationship between a take-off and target landing and a flight body based on an image of the take-off and target landing captured by an imaging device mounted on the flight body, and control take-off and landing of the flight body based on the calculation result.

WO 2018/064657 A1 relates to a research method during a landing process of an unmanned aerial vehicle (UAV). CN 104 932 522 B relates to an aircraft autonomous landing method and system.

### Summary of Invention

### Technical Problem

The automatic take-off and landing system described in JP 2012-071645 A can capture a target landing point by image processing and can land a vertical take-off and landing aircraft such as a flight body on the target landing point. However, JP 2012-071645 A does not describe details of the process until the vertical take-off and landing aircraft is caused to land on the target landing point. In order to avoid interference with surrounding objects or the like when landing the vertical take-off and landing aircraft, more accurate landing control is required.

In light of the foregoing, an object of the present invention is to more accurately land a vertical take-off and landing aircraft on a target landing point.

### Solution to Problem

The subject-matter of the independent claims solves the technical problem. The dependent claims describe further preferred embodiments, and this description exemplifies how the present invention may be carried out.

In order to solve the above-described problem and to achieve the object, a vertical take-off and landing aircraft according to the present invention may include the automatic landing system for the vertical take-off and landing aircraft.

In order to solve the above-described problem and to achieve the object, a landing control method for a vertical take-off and landing aircraft according to the present invention is provided according to claim 10.

### Advantageous Effects of Invention

The automatic landing system for the vertical take-off and landing aircraft, the vertical take-off and landing aircraft, and the landing control method for the vertical take-off and landing aircraft according to the present invention provide the effect of being able to more accurately land the vertical take-off and landing aircraft on a target landing point.

### Brief Description of Drawings

FIG. 1 is a schematic configuration diagram illustrating an example of an automatic landing system for a vertical take-off and landing aircraft according to a first embodiment.
FIG. 2 is an explanatory diagram illustrating a state where the vertical take-off and landing aircraft according to the first embodiment travels toward a target landing point.
FIG. 3 is an explanatory diagram illustrating an example of a marker provided at a target landing point.
FIG. 4 is a flowchart illustrating an example of a processing procedure of a landing control method for a vertical take-off and landing aircraft according to the first embodiment.
FIG. 5 is an explanatory diagram illustrating a landing operation of the vertical take-off and landing aircraft according to the first embodiment.
FIG. 6 is a flowchart illustrating an example of a processing procedure in an approach mode.
FIG. 7 is a flowchart illustrating an example of a processing procedure in a high altitude hovering mode.
FIG. 8 is a flowchart illustrating an example of a processing procedure in a low altitude hovering mode.
FIG. 9 is a flowchart illustrating an example of a processing procedure in a landing mode.
FIG. 10 is a flowchart illustrating an example of relative position calculation processing.
FIG. 11 is a schematic configuration diagram illustrating an example of an automatic landing system for a vertical take-off and landing aircraft according to a second embodiment.
FIG. 12 is a flowchart illustrating an example of a processing procedure in a high altitude hovering mode according to the second embodiment.
FIG. 13 is a flowchart illustrating an example of a processing procedure in a low altitude hovering mode according to the second embodiment.
FIG. 14 is a schematic configuration diagram illustrating an example of an automatic landing system for a vertical take-off and landing aircraft according to a third embodiment.
FIG. 15 is a flowchart illustrating an example of a processing procedure in a high altitude hovering mode according to the third embodiment.
FIG. 16 is a flowchart illustrating an example of a processing procedure in a low altitude hovering mode according to the third embodiment.

### Description of Embodiments

Detailed descriptions of embodiments of an automatic landing system for a vertical take-off and landing aircraft, a vertical take-off and landing aircraft, and a landing control method for a vertical take-off and landing aircraft according to the present invention will be given below based on the drawings. Note that, the invention is not limited to the embodiments.

### First Embodiment

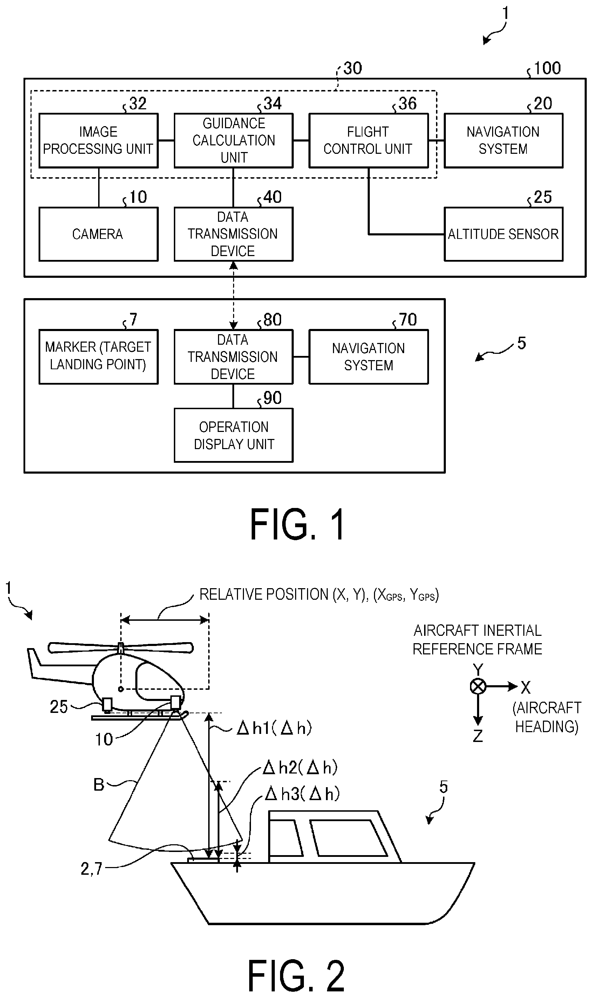

FIG. 1 is a schematic configuration diagram illustrating an example of an automatic landing system for a vertical take-off and landing aircraft according to a first embodiment, and FIG. 2 is an explanatory diagram illustrating a state where the vertical take-off and landing aircraft according to the first
embodiment travels toward a target landing point. A vertical take-off and landing aircraft 1 according to the first embodiment is a flight body (for example, a helicopter or a drone) that serves as a rotorcraft. In the present embodiment, the vertical take-off and landing aircraft 1 is an unmanned aircraft. Note that the vertical take-off and landing aircraft 1 may be a flight body capable of traveling forward, traveling backward, turning, traveling laterally, and hovering, or may be a manned aircraft. Also, in a case where the vertical take-off and landing aircraft 1 is an unmanned aircraft, when remote manual control is performed while flight of the unmanned aircraft is controlled on automatic pilot, flight control based on the remote manual control is prioritized. Similarly, in a case where the vertical take-off and landing aircraft 1 is a manned aircraft, when manual control is performed while flight of the manned aircraft is controlled on automatic pilot, flight control based on the manual control is prioritized. This vertical take-off and landing aircraft 1 is equipped with an automatic landing system 100, its flight is controlled by the automatic landing system 100, and the vertical take-off and landing aircraft 1 lands on a target landing point 2 illustrated in FIG. 2.

### Target Landing Point

In the present embodiment, the target landing point 2 is provided on a marine vessel 5, as illustrated in FIG. 2. Thus, the vertical take-off and landing aircraft 1 lands on (boards) the marine vessel 5 serving as a movable body that moves on water. However, the target landing point 2 is not limited to the marine vessel 5, and may be provided on a vehicle or the like serving as a movable body that moves on the ground, may be provided on a facility that does not move, or may be provided on the ground. Note that, the marine vessel 5 includes a securing device (not illustrated) for securing the vertical take-off and landing aircraft 1 when the vertical take-off and landing aircraft 1 is caused to land on the target landing point 2.

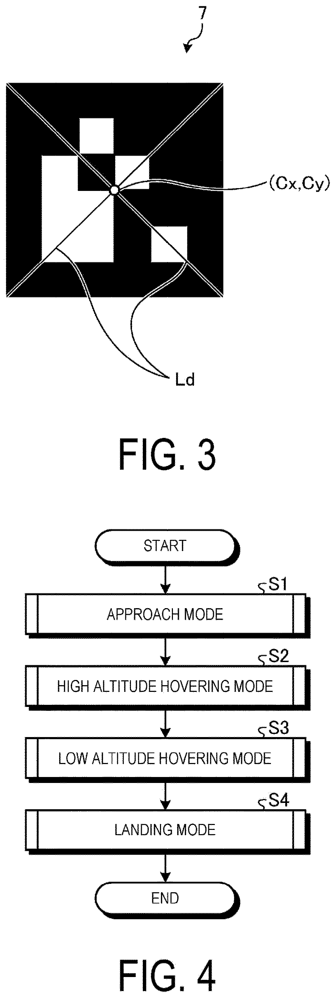

The target landing point 2 is provided with a marker 7 that allows the vertical take-off and landing aircraft 1 to capture a position of the target landing point 2. FIG. 3 is an explanatory diagram illustrating an example of a marker provided at a target landing point. As illustrated, the marker 7 is an AR marker that made up of two colors of black and white, for example, and is a square marker. Note that the marker 7 is not limited to the AR marker, and may be a marker with which the position of the target landing point 2 can be captured by image processing, or may be, for example, an H mark or an R mark indicating the landing point of a heliport or the like. Furthermore, a plurality of markers having different shapes may be provided on the marine vessel 5 as the marker 7, and the vertical take-off and landing aircraft 1 may be guided to the target landing point 2 corresponding to any of the different markers 7.

### Marine Vessel

As illustrated in FIG. 1, the marine vessel 5 includes a navigation system 70, a data transmission device 80, and an operation display unit 90. The navigation system 70 is, for example, an inertial navigation system (INS), and acquires attitude angles in a pitch direction and a roll direction, a ship heading, velocity, acceleration, position coordinates in a geographic coordinate system, and the like, of the marine vessel 5. Note that in the present embodiment, the navigation system 70 is described with the inertial navigation system being employed, but the navigation system 70 is not particularly limited thereto and any kind of navigation system 70 may be used. Furthermore, in the present embodiment, the navigation system 70 is an inertial navigation system including a global positioning system (GPS) serving as a position measuring unit in order to more accurately measure a position. Although the present embodiment will deal with a case of employing an inertial navigation system including the GPS, the present invention is not particularly limited to the GPS, and it is only required that the position measuring unit is capable of measuring a position with high accuracy. For example, a quasi-zenith satellite system may be used, or the position measuring unit such as the GPS may be omitted provided that a position can be accurately measured by using only the navigation system 70. Furthermore, the navigation system 70 may acquire at least some of various types of data by using a sensor. The data transmission device 80 is provided in the automatic landing system 100 to be described below, and exchanges various signals by wireless communication with a data transmission device 40 mounted on the vertical take-off and landing aircraft 1. The operation display unit 90 is a user interface that enables an operator aboard the marine vessel 5 to identify a control status and to input various types of instructions. Examples of the instructions to be input by the operator by using the operation display unit 90 include a transition instruction in a control mode to be described later. Details of the transition instruction will be described below. The instruction input via the operation display unit 90 is transmitted from the data transmission device 80 to the data transmission device 40. Additionally, the control status of the vertical take-off and landing aircraft 1 is transmitted from the data transmission device 40 to the data transmission device 80. In other words, the data transmission device 40 and the data transmission device 80 are capable of bi-directional communication.

### Automatic Landing System

The automatic landing system 100 for the vertical take-off and landing aircraft 1 according to the first embodiment is a system for controlling the position of the vertical take-off and landing aircraft 1 in order to land the vertical take-off and landing aircraft 1 on the target landing point 2 during flight. The automatic landing system 100 is mounted on the vertical take-off and landing aircraft 1. The automatic landing system 100 includes a camera 10, a navigation system 20, a control unit 30, and the data transmission device 40, as illustrated in FIG. 1.

### Imaging Device

The camera 10 is an imaging device mounted on the vertical take-off and landing aircraft 1 by using a gimbal (not illustrated). The camera 10 may be a monocular camera, a compound eye camera, an infrared camera, or the like, as long as the marker 7 can be imaged. The camera 10 is provided to image the marker 7 provided at the target landing point 2 from the vertical take-off and landing aircraft 1. The camera 10 is capable of adjusting an imaging direction by using the gimbal (not illustrated). In the present embodiment, the camera 10 is controlled by the control unit 30 such that a coverage area (an angle of view) B (see FIG. 2) of the camera 10 is directed downward in a vertical direction, as an example. Note that the camera 10 may be controlled by the control unit 30 such that the coverage area B is directed diagonally forward with respect to the vertical direction. In addition, in the camera 10, the gimbal may be omitted and the camera 10 may be fixed directly under the body of the vertical take-off and landing aircraft 1 such that the imaging direction is directed downward in the vertical direction, for example.

### Navigation System

As with the navigation system 70, the navigation system 20 is, for example, an inertial navigation system including a GPS. Note that, as with the navigation system 70, the navigation system 20 is not particularly limited and may be an inertial navigation system including a position measuring unit such as the GPS, or may be an inertial navigation system in which a position measuring unit such as the GPS is omitted. The navigation system 20 including the GPS acquires attitude angles in a pitch direction and a roll direction of the vertical take-off and landing aircraft 1, an aircraft heading, an aircraft velocity and an aircraft acceleration of the vertical take-off and landing aircraft 1, position coordinates in a geographic coordinate system, and the like. Note that the navigation system 20 may include an attitude angle sensor that detects the attitude angles of the vertical take-off and landing aircraft 1, a velocity detection sensor that detects the aircraft velocity of the vertical take-off and landing aircraft 1, an acceleration detection sensor that detects aircraft acceleration of the vertical take-off and landing aircraft 1, and a sensor that detects the aircraft heading of the vertical take-off and landing aircraft 1. The navigation system 20 outputs the acquired attitude angles, aircraft velocity, aircraft acceleration, and position coordinates of the vertical take-off and landing aircraft 1 to the control unit 30.

The automatic landing system 100 also includes an altitude sensor 25 that detects an altitude of the vertical take-off and landing aircraft 1 from the ground surface or water surface, as illustrated in FIG. 1. The altitude sensor 25 is, for example, a laser altimeter, and measures a relative altitude Δh (see FIG. 2) from the vertical take-off and landing aircraft 1 to the target landing point 2. Note that, as the altitude sensor 25, a radio altimeter may be used, a barometric altimeter may be used, or any altimeter may be used. These altimeters may also be applied in combination as appropriate, depending on the usage environment, that is, in order to measure an altitude from the ground surface or an altitude from the sea surface. The altitude sensor 25 outputs the detected relative altitude Δh of the vertical take-off and landing aircraft 1 to the control unit 30. Note that the altitude sensor 25 measures the altitude of the vertical take-off and landing aircraft 1 and outputs the altitude to the control unit 30, and the control unit 30 may calculate the relative altitude Δh (see FIG. 2) to the target landing point 2 based on the altitude of the vertical take-off and landing aircraft 1 by using a guidance calculation unit 34 that will be described below. Further, the automatic landing system 100 is not limited to the altitude sensor 25, and the relative altitude Δh between the vertical take-off and landing aircraft 1 and the marine vessel 5 may be calculated by performing image processing on an image including the marker 7 captured by the camera 10 by using an image processing unit 32 that will be described below.

### Control Unit

The control unit 30 includes the image processing unit 32, the guidance calculation unit 34, and a flight control unit 36. Note that the control unit 30 includes an imaging control unit (not illustrated) configured to control the imaging direction of the camera 10 by using the gimbal (not illustrated) provided on the vertical take-off and landing aircraft 1. In the present embodiment, as described above, the coverage area B of the camera 10 is adjusted to be directed directly below in the vertical direction.

### Image Processing Unit

The image processing unit 32 performs image processing on an image captured by the camera 10 to calculate the center (Cx, Cy) of the marker 7, that is, the target landing point 2 (see FIG. 3). Here, the center (Cx, Cy) is a coordinate point in a camera-fixed coordinate system with the center of the image captured by the camera 10 serving as an origin, and can be calculated based on the number of pixels from the center of the image. Specifically, as illustrated in FIG. 3, the image processing unit 32 identifies two diagonals Ld extending between corners of the marker 7 by image processing, and determines the point of intersection between the two identified diagonals Ld as the center (Cx, Cy) of the marker 7. Note that the target landing point 2 is not limited to the center (Cx, Cy) of the marker 7, and may be any of the four corners of the marker 7, or may be a position offset from the center of the marker 7.

Note that the image processing unit 32 may identify only one diagonal Ld, and may determine a center position of the length of the identified diagonal Ld as the center (Cx, Cy) of the marker 7. Additionally, the image processing unit 32 may identify two or more diagonals Ld, and may determine an average position of the center positions of the lengths of the identified diagonals Ld as the center (Cx, Cy) of the marker 7. Furthermore, when the image processing unit 32 performs trapezoidal correction on the marker 7, which has a square shape, by using a function obtained by projection transformation, the image processing unit 32 may calculate the center (Cx, Cy) of the square shape based on the function. At this time, the trapezoidal correction may be performed by using the coordinate points of the four corners of the marker 7 or the coordinate points of each of the points on boundaries marked by black and white of the marker 7, and the other coordinate points may be calculated by interpolation. The image processing unit 32 outputs the calculated center (Cx, Cy) of the marker 7 to the guidance calculation unit 34.

Additionally, as described above, the image processing unit 32 may calculate the relative altitude Δh between the vertical take-off and landing aircraft 1 and the marine vessel 5 by performing image processing on an image including the marker 7 captured by the camera 10. Furthermore, the image processing unit 32 may calculate a ship heading of the marine vessel 5 by performing image processing on the image including the marker 7 captured by the camera 10 to identify an orientation of the marker 7, and then correlating the orientation with an aircraft heading of the vertical take-off and landing aircraft 1 acquired by the navigation system 20. Note that a marker for calculating the ship heading may be separately provided on the marine vessel 5.

### Guidance calculation unit

The guidance calculation unit 34 calculates control amounts of the vertical take-off and landing aircraft 1 for guiding the vertical take-off and landing aircraft 1 to the target landing point 2. The control amounts are control amounts for adjusting the aircraft velocity, attitude angles, attitude rates, and the like of the vertical take-off and landing aircraft 1. In order to calculate the control amounts, the guidance calculation unit 34 calculates a relative position (X, Y) between the vertical take-off and landing aircraft 1 and the target landing point 2 and a relative velocity between the vertical take-off and landing aircraft 1 and the target landing point 2.

The guidance calculation unit 34 calculates the relative position (X, Y) between the vertical take-off and landing aircraft 1 and the target landing point 2 based on the center (Cx, Cy) of the marker 7 calculated by the image processing unit 32, an azimuth of the camera 10, namely, an aircraft heading of the vertical take-off and landing aircraft 1, and an altitude of the vertical take-off and landing aircraft 1 (the relative altitude Δh with respect to the target landing point 2). Note that in the present embodiment, the azimuth of the camera 10 and the aircraft heading of the vertical take-off and landing aircraft 1 are matched with each other, but the present invention is not particularly limited thereto, and the azimuth of the camera 10 and the aircraft heading of the vertical take-off and landing aircraft 1 need not be matched with each other. As described above, the image processing unit 32 and the guidance calculation unit 34 function as a relative-position acquisition unit that acquires the relative position between the vertical take-off and landing aircraft 1 and the target landing point 2. The relative position (X, Y) is a distance between the vertical take-off and landing aircraft 1 and the target landing point 2 in a horizontal direction. More specifically, the guidance calculation unit 34 converts the center (Cx, Cy) of the marker 7 in the camera-fixed coordinate system calculated by the image processing unit 32, based on the aircraft heading of the vertical take-off and landing aircraft 1 and the altitude of the vertical take-off and landing aircraft 1 (the relative altitude Δh with respect to the target landing point 2), into the relative position between the vertical take-off and landing aircraft 1 and the target landing point 2 in a ship inertial reference frame, and further converts the converted relative position into the relative position (X, Y) between the vertical take-off and landing aircraft 1 and the target landing point 2 in an aircraft inertial reference frame. At this time, the guidance calculation unit 34 may directly convert the center (Cx, Cy) of the marker 7 into the relative position (X, Y) between the vertical take-off and landing aircraft 1 and the target landing point 2 in the aircraft inertial reference frame based on the aircraft heading of the vertical take-off and landing aircraft 1 and the altitude of the vertical take-off and landing aircraft 1 (the relative altitude Δh with respect to the target landing point 2). Note that the ship inertial reference frame is a coordinate system having, with the target landing point 2 serving as an origin, a direction along the ship heading of the marine vessel 5, a direction orthogonal to the ship heading of the marine vessel 5 in a horizontal direction, and orthogonal axes being in a vertical direction. Furthermore, as illustrated in FIG. 2, the aircraft inertial reference frame is a coordinate system in which, with the vertical take-off and landing aircraft 1 serving as an origin, a direction along the aircraft heading of the vertical take-off and landing aircraft 1 serves as an X axis, a direction orthogonal to the aircraft heading of the vertical take-off and landing aircraft 1 in the horizontal direction serves as a Y axis, and the vertical direction serves as a Z axis.

Furthermore, the guidance calculation unit 34 calculates a relative position (X_{GPS}, Y_{GPS}) between the vertical take-off and landing aircraft 1 and the target landing point 2 based on position coordinates in the geographic coordinate system of the vertical take-off and landing aircraft 1 acquired by the navigation system 20 and position coordinates in the geographic coordinate system of the marine vessel 5 acquired by the navigation system 70 of the marine vessel 5 and obtained by communication between the data transmission devices 40 and 80. Thus, the guidance calculation unit 34 functions as a second relative-position acquisition unit that calculates the relative position (X_{GPS}, Y_{GPS}) between the vertical take-off and landing aircraft 1 and the target landing point 2 based on position coordinates of the vertical take-off and landing aircraft 1 obtained by the GPS and position coordinates of the marine vessel 5 provided with the target landing point 2 that are acquired by the data transmission device 40.

Furthermore, the guidance calculation unit 34 calculates a relative velocity between the vertical take-off and landing aircraft 1 and the target landing point 2. Thus, the guidance calculation unit 34 functions as a relative-velocity acquisition unit that acquires the relative velocity between the vertical take-off and landing aircraft 1 and the target landing point 2. More specifically, the guidance calculation unit 34 calculates the relative velocity based on, for example, a difference between the aircraft velocity of the vertical take-off and landing aircraft 1 and a hull velocity of the marine vessel 5, which are obtained by the navigation systems 20 and 70, respectively. In addition, the guidance calculation unit 34 may calculate the relative velocity based on a pseudo differential of the relative position (X, Y). In other words, the guidance calculation unit 34 functions as a relative-velocity acquisition unit that acquires the relative velocity. Furthermore, the guidance calculation unit 34 calculates a relative heading between the aircraft heading of the vertical take-off and landing aircraft 1 and the ship heading of the marine vessel 5.

The guidance calculation unit 34 calculates the relative altitude Δh to the target landing point 20 based on an altitude of the vertical take-off and landing aircraft 1 detected by the altitude sensor 25. Thus, the altitude sensor 25 and the guidance calculation unit 34 function as a relative-altitude acquisition unit that acquires the relative altitude Δh between the vertical take-off and landing aircraft 1 and the target landing point 2. Note that when the image processing unit 32 calculates the relative altitude Δh between the vertical take-off and landing aircraft 1 and the marine vessel 5 by performing image processing on an image including the marker 7 captured by the camera 10, the image processing unit 32 serves as the relative-altitude acquisition unit.

Then, the guidance calculation unit 34 calculates the control amounts by feedback control (PID control, for example) based on the relative position (X, Y), the relative velocity, the relative heading, and the aircraft acceleration. In the first embodiment, the guidance calculation unit 34 calculates the control amounts of the vertical take-off and landing aircraft 1 by feedback control such that the relative position (X, Y) and the relative heading become zero. Furthermore, the guidance calculation unit 34 may calculate the control amounts of the vertical take-off and landing aircraft 1 by feedback control such that the relative velocity is within a predetermined velocity and such that the aircraft acceleration is within a predetermined acceleration. The range within the predetermined velocity and within the predetermined acceleration is a range that satisfies a condition that the vertical take-off and landing aircraft 1 is considered to be in a state of stably flying at a predetermined relative altitude Δh. For example, the predetermined velocity is zero, and the predetermined acceleration is zero. The guidance calculation unit 34 outputs the calculated control amounts to the flight control unit 36. In the calculation of such control amounts, the guidance calculation unit 34 controls the vertical take-off and landing aircraft 1 in a plurality of control modes to guide and land the vertical take-off and landing aircraft 1 to the target landing point. The plurality of control modes include an approach mode, a hovering mode including a high altitude hovering mode and a low altitude hovering mode, and a landing mode. Details of each control mode will be described later.

### Flight Control Unit

The flight control unit 36 controls each constituent element of the vertical take-off and landing aircraft 1 and causes the vertical take-off and landing aircraft 1 to fly in accordance with the control amounts calculated by the guidance calculation unit 34 to be described below. The flight control unit 36 controls a blade pitch angle, a rotational speed, and the like of individual rotary blades in accordance with the control amounts, and adjusts the aircraft velocity, attitude angles, attitude rates, and the like of the vertical take-off and landing aircraft 1. Thus, the vertical take-off and landing aircraft 1 is guided to the target landing point 2. Note that in the present embodiment, the image processing unit 32 and the guidance calculation unit 34 are described as functional units separate from the flight control unit 36, but the flight control unit 36, the image processing unit 32, and the guidance calculation unit 34 may be an integrated functional unit. In other words, processing of the image processing unit 32 and the guidance calculation unit 34 may be performed in the flight control unit 36.

### Landing Control Method for Vertical Take-off and Landing Aircraft

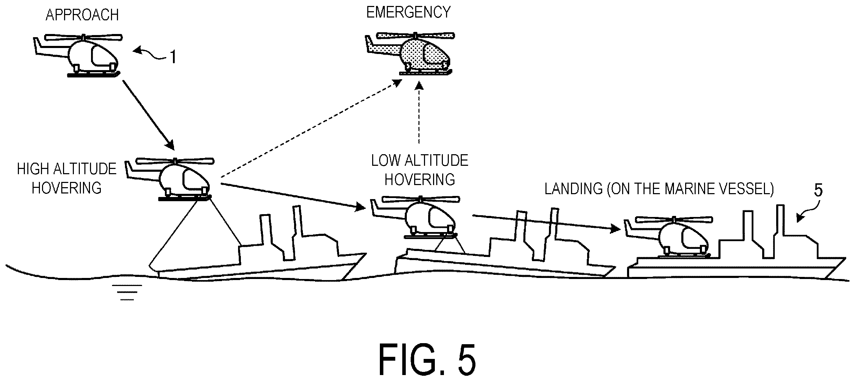

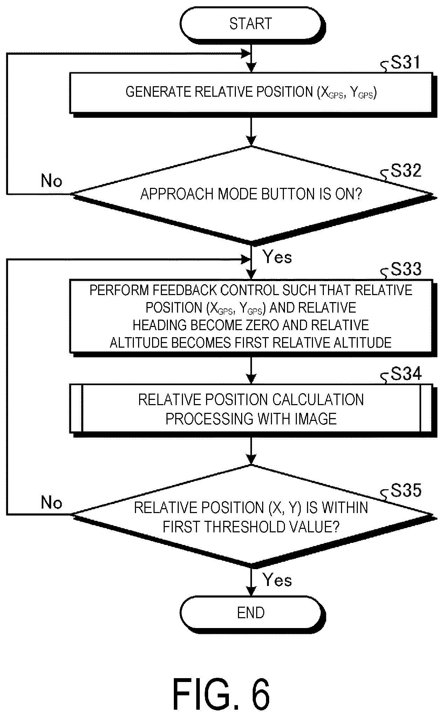

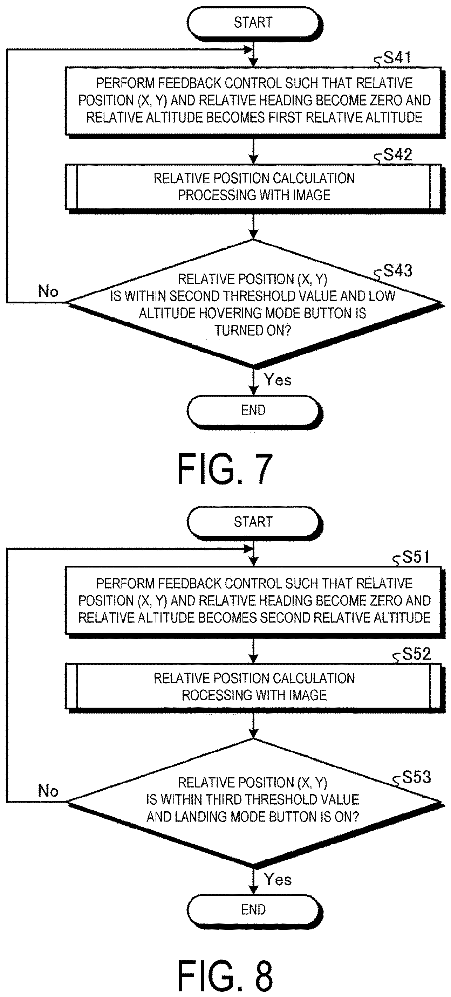

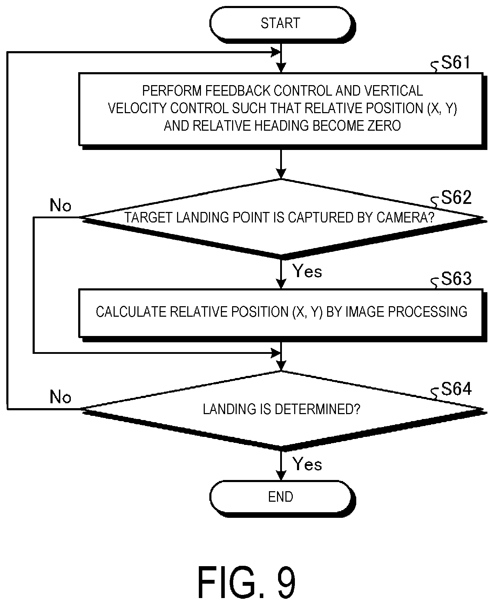

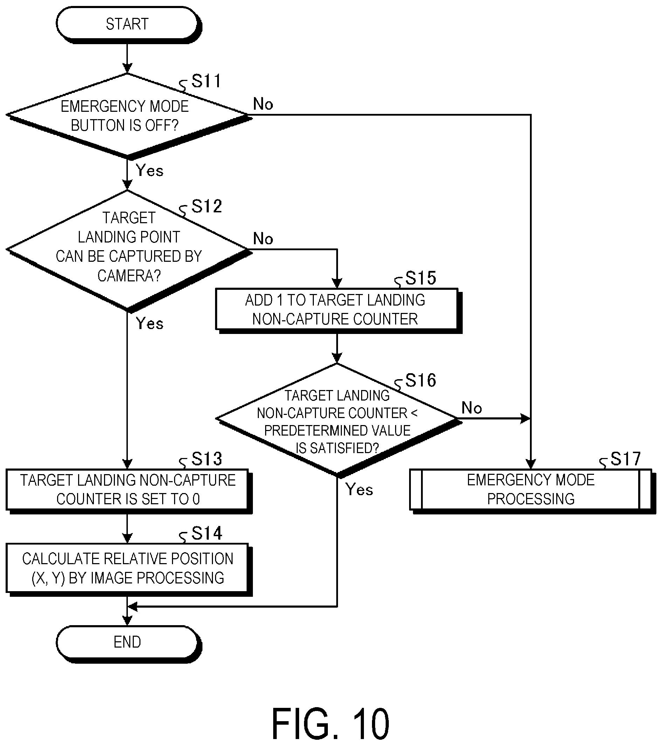

Next, as a landing control method for a vertical take-off and landing aircraft according to the first embodiment, a procedure for guiding and landing the vertical take-off and landing aircraft 1 to the target landing point 2 by using the control unit 30 will be described. FIG. 4 is a flowchart illustrating an example of a processing procedure of the landing control method for the vertical take-off and landing aircraft according to the first embodiment. FIG. 5 is an explanatory diagram illustrating a landing operation of the vertical take-off and landing aircraft according to the first embodiment. FIG. 6 is a flowchart illustrating an example of a processing procedure in the approach mode. FIG. 7 is a flowchart illustrating an example of a processing procedure in the high altitude hovering mode. FIG. 8 is a flowchart illustrating an example of a processing procedure in the low altitude hovering mode. FIG. 9 is a flowchart illustrating an example of a processing procedure in the landing mode. FIG. 10 is a flowchart illustrating an example of relative position calculation processing. The processing illustrated in FIG. 4 to FIG. 10 is executed by the guidance calculation unit 34.

First, a landing operation of the vertical take-off and landing aircraft 1 will be described with reference to FIG. 4 and FIG. 5. The vertical take-off and landing aircraft 1 executes a plurality of control modes in a series of landing operations when landing on (boarding) the marine vessel 5 from a flying state. Specifically, the vertical take-off and landing aircraft 1 performs the series of landing operations by performing a step S1 in which the approach mode is executed, a step S2 in which the high altitude hovering mode is executed, a step S3 in which the low altitude hovering mode is executed, and a step S4 in which the landing mode is executed in this order. The vertical take-off and landing aircraft 1 also performs a step (a step S17 that will be described below) of executing an emergency mode in which execution of the high altitude hovering mode and the low altitude hovering mode is interrupted and the landing operation is interrupted.

As illustrated in FIG. 5, the approach mode is a mode in which the vertical take-off and landing aircraft 1 is caused to advance above the deck of the marine vessel 5 and the vertical take-off and landing aircraft 1 is caused to hover over the marker 7 serving as the target landing point 2, based on an instruction from the marine vessel 5. The high altitude hovering mode is a mode in which the vertical take-off and landing aircraft 1 hovers such that the marker 7 on the deck is captured by the camera 10, and the target landing point 2 that is the center of the marker 7 is at the center of the coverage area (angle of view) B of the camera 10. The low altitude hovering mode is a mode in which the vertical take-off and landing aircraft 1 descends and hovers at a lower altitude than that in the high altitude hovering mode. The landing mode is a mode in which the vertical take-off and landing aircraft 1 lands on the target landing point 2. The emergency mode is a mode in which the landing operation of the vertical take-off and landing aircraft 1 on the marine vessel 5 is interrupted and the vertical take-off and landing aircraft 1 ascends.

The vertical take-off and landing aircraft 1 performs the landing operation on the marine vessel 5 by executing these control modes. Next, each control mode will be described in detail with reference to FIG. 6 to FIG. 10.

### Approach Mode

The guidance calculation unit 34 executes the approach mode as step S1. The approach mode will be described in detail with reference to FIG. 6. As a step S31, the guidance calculation unit 34 calculates (generates) the relative position (X_{GPS}, Y_{GPS}) from position coordinates obtained by the navigation systems 20 and 70, that is, the GPSs.

Next, the guidance calculation unit 34 determines whether an approach mode button is turned on as a step S32. The approach mode button is a button provided on the operation display unit 90 of the marine vessel 5 for inputting a transition instruction of the control mode, and is turned on and off by an operator aboard the marine vessel 5. The operator turns on the approach mode button once the vertical take-off and landing aircraft 1 is ready for landing on the marine vessel 5. When the control unit 30 determines that the approach mode button is not turned on (NO in step S32), the control unit 30 continues the processing in step S31. On the other hand, when the control unit 30 determines that the approach mode button is turned on (YES in step S32), the control unit 30 proceeds to the processing in a step S33.

As step S33, the guidance calculation unit 34 executes feedback control such that the relative position (X_{GPS}, Y_{GPS}) generated in step S31 becomes zero. In this way, the guidance calculation unit 34 causes the vertical take-off and landing aircraft 1 to fly in the horizontal direction toward the target landing point 2. Furthermore, the guidance calculation unit 34 executes the feedback control such that the calculated relative heading between the aircraft heading of the vertical take-off and landing aircraft 1 and the ship heading of the marine vessel 5 becomes zero, as an example. As a result, the guidance calculation unit 34 causes the vertical take-off and landing aircraft 1 to fly such that the aircraft heading of the vertical take-off and landing aircraft 1 matches the ship heading of the marine vessel 5 in the horizontal direction. Note that, as an example, the guidance calculation unit 34 performs the feedback control such that the relative heading becomes zero, but the present invention is not particularly limited thereto, and the relative heading does not need to be zero. Furthermore, the guidance calculation unit 34 executes the feedback control such that the relative altitude Δh measured by the altitude sensor 25 becomes a first relative altitude Δh1. As a result, the guidance calculation unit 34 causes the vertical take-off and landing aircraft 1 to descend from an initial altitude to the first relative altitude Δh1 (see FIG. 2) in the vertical direction, and causes the vertical take-off and landing aircraft 1 to maintain the first relative altitude Δh1. The first relative altitude Δh1 is, for example, 8 m. Thus, in the approach mode, flight of the vertical take-off and landing aircraft 1 is controlled such that the vertical take-off and landing aircraft 1 is within a predetermined range of the target landing point 2 by performing control such that the relative position (X_{GPS}, Y_{GPS}) becomes zero.

The guidance calculation unit 34 executes relative position calculation processing with an image as a step S34, and calculates the relative position (X, Y) as a distance in the horizontal direction between the vertical take-off and landing aircraft 1 and the target landing point 2. Details of the relative position calculation processing with an image will be described later.

The guidance calculation unit 34 determines, as a step S35, whether the relative position (X, Y) as the distance in the horizontal direction, which has been calculated in step S34, between the vertical take-off and landing aircraft 1 and the target landing point 2 is within a first threshold value. The first threshold value is set as a value at which there is sufficient distance for the camera 10 to continue to capture the target landing point 2. When the guidance calculation unit 34 determines that the relative position (X, Y) is not within the first threshold value (NO in step S35), the guidance calculation unit 34 executes the processing of step S33 and subsequent steps again. That is, the vertical take-off and landing aircraft 1 performs the processing of step S33 and subsequent steps again due to the determination that the camera 10 cannot capture the target landing point 2, that is, the vertical take-off and landing aircraft 1 is not sufficiently close to the target landing point 2. Then, the guidance calculation unit 34 iterates the processing of step S33 and subsequent steps until the vertical take-off and landing aircraft 1 is at a distance sufficient to allow the camera 10 to continue to capture the target landing point 2. When the guidance calculation unit 34 determines that the relative position (X, Y) is
within the first threshold value (YES in step S35), the guidance calculation unit 34 ends the approach mode and shifts the control mode to the next control mode due to the determination that the vertical take-off and landing aircraft 1 is at a distance sufficient to allow the camera 10 to continue to capture the target landing point 2, that is, the vertical take-off and landing aircraft 1 is sufficiently close to the target landing point 2.

### High Altitude Hovering Mode

Description will be made returning to FIG. 4. When the approach mode has ended, the guidance calculation unit 34 executes the high altitude hovering mode as step S2. The high altitude hovering mode will be described in detail with reference to FIG. 7. In the high altitude hovering mode, the guidance calculation unit 34 executes the feedback control such that the relative position (X, Y) calculated in the relative position calculation processing with an image becomes zero, as illustrated in step S41 in FIG. 7. Additionally, the guidance calculation unit 34 executes the feedback control such that the calculated relative heading between the aircraft heading of the vertical take-off and landing aircraft 1 and the ship heading of the marine vessel 5 becomes zero, as an example. Furthermore, the guidance calculation unit 34 executes the feedback control such that the relative altitude Δh measured by the altitude sensor 25 becomes the first relative altitude Δh1. In this way, the guidance calculation unit 34 causes the vertical take-off and landing aircraft 1 to maintain the first relative altitude Δh1 while causing the vertical take-off and landing aircraft 1 to hover directly above the target landing point 2 in the vertical direction. Then, the guidance calculation unit 34 executes the relative position calculation processing with an image again as a step S42.

As a step S43, the guidance calculation unit 34 determines whether the relative position (X, Y) calculated in step S42 is within a second threshold value, and whether a low altitude hovering mode button is turned on. The second threshold value is set as a value that is equal to or less than the first threshold value in the approach mode. The low altitude hovering mode button is a button provided on the operation display unit 90 of the marine vessel 5 for inputting a transition instruction of the control mode, and is turned on and off by an operator aboard the marine vessel 5. The operator visually checks whether the vertical take-off and landing aircraft 1 can stably fly at the first relative altitude Δh1, and turns on the low altitude hovering mode button when the vertical take-off and landing aircraft 1 can stably fly. Step S43 is for determining whether a first condition for transition from the high altitude hovering mode to the low altitude hovering mode is satisfied. That is, in the first embodiment, the first condition includes, in addition to the condition that the relative position (X, Y) is within the second threshold value, a condition that the operator has instructed a mode transition to the low altitude hovering mode.

When the guidance calculation unit 34 determines that the relative position (X, Y) is not within the second threshold value (NO in step S43), the guidance calculation unit 34 executes the processing of step S41 and subsequent steps again. In addition, when the guidance calculation unit 34 determines that the low altitude hovering mode button is not turned on (NO in step S43), the guidance calculation unit 34 also executes the processing of step S41 and subsequent steps again. Then, the guidance calculation unit 34 iterates the processing of step S41 and subsequent steps until the relative position (X, Y) of the vertical take-off and landing aircraft 1 with respect to the target landing point 2 falls within the second threshold value. When the guidance calculation unit 34 determines that the relative position (X, Y) is within the second threshold value and that the low altitude hovering mode button is turned on (YES in step S43), the guidance calculation unit 34 ends the high altitude hovering mode and shifts to the next control mode.

### Low Altitude Hovering Mode

Description will be made returning to FIG. 4. When the guidance calculation unit 34 ends the high altitude hovering mode, the guidance calculation unit 34 executes the low altitude hovering mode as the step S3. The low altitude hovering mode will be described in details with reference to FIG. 8. In the low altitude hovering mode, the guidance calculation unit 34 executes the feedback control such that the relative position (X, Y) calculated in the relative position calculation processing with an image becomes zero, as illustrated in a step S51 in FIG. 8. Additionally, the guidance calculation unit 34 executes the feedback control such that the calculated relative heading between the aircraft heading of the vertical take-off and landing aircraft 1 and the ship heading of the marine vessel 5 becomes zero, as an example. Furthermore, the guidance calculation unit 34 performs the feedback control such that the relative altitude Δh measured by the altitude sensor 25 becomes a second relative altitude Δh2 that is lower than the first relative altitude Δh1. Due to this, the guidance calculation unit 34 causes the altitude of the vertical take-off and landing aircraft 1 to descend to the second relative altitude Δh2 (see FIG. 2) while causing the vertical take-off and landing aircraft 1 to perform hovering directly above the target landing point 2. The second relative altitude Δh2 is, for example, 3 m. At this time, the guidance calculation unit 34 causes a descent rate of the vertical take-off and landing aircraft 1 to be a first descent rate. The first descent rate is, for example, 0.6 m/s. Then, the guidance calculation unit 34 executes the relative position calculation processing with an image again as a step S52.

As a step S53, the guidance calculation unit 34 determines whether the relative position (X, Y) calculated in the step S52 is within a third threshold value (predetermined threshold value) or not and whether a landing mode button is turned on or not. The third threshold value is set as a value that is less than or equal to the second threshold value in the high altitude hovering. Additionally, the landing mode button is a button provided on the operation display unit 90 of the marine vessel 5 for inputting a transition instruction of the control mode, and is turned on and off by an operator being aboard the marine vessel 5. The operator visually checks whether the vertical take-off and landing aircraft 1 can stably fly at the second relative altitude Δh2, and turns on the landing mode button when the vertical take-off and landing aircraft 1 can stably fly. In the step S53, whether a second condition (predetermined condition) for the transition from the low altitude hovering mode to the landing mode is satisfied or not is determined. That is, in the first embodiment, the second condition includes, in addition to the condition that the relative position (X, Y) is within the third threshold value, a condition that the operator has instructed a mode transition to the landing mode. Note that the operator may turn on the landing mode button even when the vertical take-off and landing aircraft 1 is not stable.

When the guidance calculation unit 34 determines that the relative position (X, Y) is not within the third threshold value (NO in the step S53), the guidance calculation unit 34 executes the processing of the step S51 and the subsequent steps again. Also, in a case where the guidance calculation unit 34 determines that the landing mode button is not turned on (NO in the step S53), the guidance calculation unit 34 executes the processing of the step S51 and the subsequent steps again. Then, the guidance calculation unit 34 repeatedly performs the processing of the step S51 and the subsequent steps such that the vertical take-off and landing aircraft 1 is at a position where the relative position (X, Y) with respect to the target landing point 2 is within the third threshold value and descends to the second relative altitude Δh2. When the guidance calculation unit 34 determines that the relative position (X, Y) is within the third threshold value and that the landing mode button is turned on (YES in the step S53), the guidance calculation unit 34 ends the low altitude hovering mode and shifts to the next control mode.

### Landing Mode

Description will be made returning to FIG. 4. When the guidance calculation unit 34 ends the low altitude hovering mode, the guidance calculation unit 34 performs the landing mode as step S4. The landing mode will be described in detail with reference to FIG. 9. In the landing mode, as illustrated in step S61 in FIG. 9, the guidance calculation unit 34 executes feedback control such that the relative position (X, Y) calculated in the relative position calculation processing with an image becomes zero. Additionally, the guidance calculation unit 34 executes the feedback control such that the calculated relative heading between the aircraft heading of the vertical take-off and landing aircraft 1 and the ship heading of the marine vessel 5 becomes zero, as an example. Furthermore, the guidance calculation unit 34 performs vertical velocity control in which a descent rate is made to be constant until the relative altitude Δh measured by the altitude sensor 25 reaches a third relative altitude Δh3. The descent rate is the degree of altitude descending per unit time. In the vertical velocity control, the guidance calculation unit 34 causes a descent rate of the vertical take-off and landing aircraft 1 to be a second descent rate. As a result, the guidance calculation unit 34 lowers the relative altitude Δh of the vertical take-off and landing aircraft 1 to the third relative altitude Δh3 (see FIG. 2). The third relative altitude Δh3 is, for example, 10 cm. In addition, the second descent rate is, for example, 1.0 m/s. Note that in the present embodiment, although the second descent rate is set to be larger than the first descent rate in order to quickly land the vertical take-off and landing aircraft 1 on the target landing point 2 in the landing mode, any of the first descent rate and the second descent rate may be set to be larger, or the first descent rate and the second descent rate may have the same value. Furthermore, when the altitude of the vertical take-off and landing aircraft 1 reaches the third relative altitude Δh3, the guidance calculation unit 34 causes the vertical take-off and landing aircraft 1 to further descend while holding the control amounts related to the attitude angles of the vertical take-off and landing aircraft 1 when the altitude of the vertical take-off and landing aircraft 1 reaches the third relative altitude Δh3.

The guidance calculation unit 34 determines whether the target landing point 2 can be captured by the camera 10 as a step S62. Whether the target landing point 2 can be captured by the camera 10 can be calculated by processing similar to that in the relative position calculation processing with an image in a step S12 that will be described below. When the guidance calculation unit 34 determines that the target landing point 2 can be captured by the camera 10 (YES in step S62), the guidance calculation unit 34 calculates the relative position (X, Y) by the image processing as a step S63. The relative position (X, Y) can be calculated by processing similar to that in a step S14 of the relative position calculation processing with an image that will be described later. On the other hand, when the guidance calculation unit 34 determines that the target landing point 2 cannot be captured by the camera 10 (NO in step S62), the guidance calculation unit 34 omits the processing of step S63 and proceeds to a step S64. In the present embodiment, in the landing mode, the landing mode is continuously performed due to the fact that the vertical take-off and landing aircraft 1 is in a state of being sufficiently close to the target landing point 2 and, even when the vertical take-off and landing aircraft 1 temporarily cannot capture the target landing point 2 by the camera 10, the vertical take-off and landing aircraft 1 can land near the target landing point 2. Note that, when the vertical take-off and landing aircraft 1 is a manned aircraft, the execution of the landing mode may be interrupted based on the determination of a pilot.

The flight control unit 36 determines, as step S64, whether the vertical take-off and landing aircraft 1 has landed on the target landing point 2. Whether the vertical take-off and landing aircraft 1 has landed on the target landing point 2 can be determined, for example, by providing a contact-type sensor on landing gear (not illustrated) of the vertical take-off and landing aircraft 1. When the flight control unit 36 determines that the vertical take-off and landing aircraft 1 has not landed on the target landing point 2 (NO in step S64), the flight control unit 36 executes the processing of step S61 and subsequent steps again. This controls the vertical take-off and landing aircraft 1 to descend in accordance with the procedure of step S61 until the vertical take-off and landing aircraft 1 lands on the target landing point 2. When the flight control unit 36 determines that the vertical take-off and landing aircraft 1 has landed on the target landing point 2 (YES in step S64), the guidance calculation unit 34 ends the landing mode. This also ends the processing routine illustrated in FIG. 4.

### Relative Position Calculation processing with Image

Next, the relative position calculation processing with an image will be described with reference to FIG. 10. In the relative position calculation processing with an image, the guidance calculation unit 34 determines whether an emergency mode button is off, as a step S11. The emergency mode button is provided on the operation display unit 90 of the marine vessel 5, and is turned on and off by an operator aboard the marine vessel 5. The operator turns on the emergency mode button when the operator determines that the vertical take-off and landing aircraft 1 should stop landing on the marine vessel 5. Specifically, the operator turns on the emergency mode button after visually checking the fact that the flying state of the vertical take-off and landing aircraft 1 is unstable, for example, due to influence of wind, occurrence of some kind of failure, or the like.

When the guidance calculation unit 34 determines in step S11 that the emergency mode button is on (NO in step S11), the guidance calculation unit 34 shifts to execution of the emergency mode as a step S17. In the emergency mode, the guidance calculation unit 34 causes the vertical take-off and landing aircraft 1 to ascend once to a predetermined altitude (for example, 20 m) being sufficiently away from the marine vessel 5 and to maintain the current relative position (X, Y). When shifting to the emergency mode, the guidance calculation unit 34 can perform the emergency mode during execution of step S2 in which the high altitude hovering mode illustrated in FIG. 4 is performed and step S3 in which the low altitude hovering mode is executed. Once the guidance calculation unit 34 causes the vertical take-off and landing aircraft 1 to ascend to an altitude that is sufficiently away from the marine vessel 5 by performing the emergency mode, the guidance calculation unit 34 restarts the processing illustrated in FIG. 4 again from step S1.

On the other hand, when the guidance calculation unit 34 determines that the emergency mode button is off (YES in step S11), the guidance calculation unit 34 determines whether the target landing point 2 can be captured by the camera 10, as step S12. Whether the target landing point 2 can be captured by the camera 10 can be determined by whether information that can be used to calculate the center (Cx, Cy) of the marker 7 can be obtained in an image captured by the camera 10.

When the guidance calculation unit 34 determines that the target landing point 2 can be captured by using the camera 10 (YES in step S12), the guidance calculation unit 34 sets a target non-capture counter to a value of 0, as a step S13. Then, as step S14, the guidance calculation unit 34 calculates the relative position (X, Y) between the vertical take-off and landing aircraft 1 and the target landing point 2 based on the center (Cx, Cy) of the marker 7, an azimuth of the camera 10 (i.e., the aircraft heading of the vertical take-off and landing aircraft 1 having the same azimuth), and the altitude of the vertical take-off and landing aircraft 1 (the relative altitude Δh with respect to the target landing point 2). As described above, the relative position (X, Y) is calculated by converting the center (Cx, Cy) of the marker 7 in the camera-fixed coordinate system calculated by the image processing unit 32 into the relative position between the vertical take-off and landing aircraft 1 and the target landing point 2 in the ship inertial reference frame, and further converting the converted relative position into the relative position (X, Y) between the vertical take-off and landing aircraft 1 and the target landing point 2 in the aircraft inertial reference frame.

On the other hand, in step S12, when the guidance calculation unit 34 determines that the target landing point 2 cannot be captured by using the camera 10 (NO in step S12), the guidance calculation unit 34 adds a value of 1 to the target non-capture counter as a step S15, and determines whether the target non-capture counter is within a predetermined value as a step S16. When the guidance calculation unit 34 determines that the target non-capture counter is within a predetermined value (YES in step S16), the guidance calculation unit 34 executes the processing of step S11 and subsequent steps again. When the guidance calculation unit 34 determines that the target non-capture counter is not within the predetermined value (NO in step S16), the guidance calculation unit 34 proceeds to a step S17 and shifts to execution of the emergency mode. In other words, the guidance calculation unit 34 determines that, when the target non-capture counter exceeds the predetermined value, a time period for which the target landing point 2 cannot be captured by the camera 10 continues longer than or equal to a predetermined time period, and executes the emergency mode.

### Operational Effects of First Embodiment

As described above, the automatic landing system 100 for a vertical take-off and landing aircraft according to the first embodiment includes the camera 10 (an imaging device) mounted on the vertical take-off and landing aircraft 1, the image processing unit 32 and the guidance calculation unit 34 (a relative-position acquisition unit) configured to perform image processing on an image, of the marker 7 provided at the target landing point 2, captured by the camera 10 and to acquire a relative position (X, Y) between the vertical take-off and landing aircraft 1 and the target landing point 2, the guidance calculation unit 34 (a relative-velocity acquisition unit) configured to acquire a relative velocity between the vertical take-off and landing aircraft 1 and the target landing point 2, the altitude sensor 25 and the guidance calculation unit 34 (a relative-altitude acquisition unit) configured to acquire a relative altitude Δh between the vertical take-off and landing aircraft 1 and the target landing point 2, and the control unit 30 configured to control the vertical take-off and landing aircraft 1 in a plurality of control modes such that the relative position (X, Y) between the vertical take-off and landing aircraft 1 and the target landing point 2 becomes zero, wherein the plurality of control modes include the hovering mode and the landing mode, and in the hovering mode, when the relative position (X, Y) is within the first threshold value, the relative altitude Δh of the vertical take-off and landing aircraft 1 is lowered to the second relative altitude Δh2 (a predetermined relative altitude) and when the second condition (a predetermined condition) including a condition that the relative position (X, Y) is within the third threshold value (a predetermined threshold value) is satisfied, the control mode is shifted to the landing mode, and in the landing mode, the relative altitude Δh of the vertical take-off and landing aircraft 1 is further lowered and, when the relative altitude Δh is lower than or equal to the third relative altitude Δh3 (a predetermined value), the vertical take-off and landing aircraft 1 is caused to descend and land on the target landing point 2 while a command for the control amounts related to the attitude angles of the vertical take-off and landing aircraft 1 is being held.

With this configuration, the target landing point 2 can be captured by using the camera 10, and when the relative position (X, Y) is within the first threshold value, the vertical take-off and landing aircraft 1 can be controlled in the order of the hovering mode and the landing mode and be caused to land on the target landing point 2. In the hovering mode, the condition that the vertical take-off and landing aircraft 1 is caused to descend to the second relative altitude Δh2 and the relative position (X, Y) is within the third threshold value (a predetermined threshold value) is regarded as a condition for shifting to the landing mode. Thus, the vertical take-off and landing aircraft 1 is moved closer to the target landing point 2, and then, the control mode can be shifted to the landing mode. Additionally, in the landing mode, when the relative altitude Δh reaches the third relative altitude Δh3, the vertical take-off and landing aircraft 1 is caused to descend and land on the target landing point 2 while holding the control amounts related to the attitude angles of the vertical take-off and landing aircraft 1 when the relative altitude Δh reaches the third relative altitude Δh3. Thus, when the vertical take-off and landing aircraft 1 is positioned directly in front of the target landing point 2, the vertical take-off and landing aircraft 1 can be caused to land on the target landing point 2, while unstable behavior of the vertical take-off and landing aircraft 1 is suppressed by controlling the attitude angles of the vertical take-off and landing aircraft 1. Note that, although the automatic landing system 100 performs control such that the relative position becomes zero, in practice, after landing the vertical take-off and landing aircraft 1 on the marine vessel 5, the relative position does not necessarily become zero including errors, and the position of the vertical take-off and landing aircraft 1 and the position of the target landing point 2 do not perfectly coincide.

Further, in the first embodiment, when the target landing point 2 can be captured by at least the camera 10, the relative position (X, Y) can be calculated based on the marker 7 captured by the camera 10. In other words, when the relative position (X, Y) is calculated, data communication with the marine vessel 5 side is not required. Thus, when the vertical take-off and landing aircraft 1 is controlled based on the relative position (X, Y), positioning accuracy can be improved and degradation in the responsiveness of the flight control caused by performing communication can be suppressed because influence due to errors or the like caused by the navigation systems 20 and 70 can be avoided.

Thus, according to the first embodiment, the vertical take-off and landing aircraft 1 can be more accurately landed on the target landing point 2. Further, by accurately controlling the position of the vertical take-off and landing aircraft 1 with respect to the target landing point 2, interference between the vertical take-off and landing aircraft 1 and facilities or structures provided near the target landing point 2 can be suppressed.

Additionally, the hovering mode includes the high altitude hovering mode and the low altitude hovering mode, wherein, in the high altitude hovering mode, when the relative position (X, Y) is within the first threshold value, the relative altitude Δh of the vertical take-off and landing aircraft 1 is maintained at the first relative altitude Δh1 that is higher than the second relative altitude Δh2 (a predetermined relative altitude), and when the first condition including the condition that the relative position (X, Y) is within the second threshold value is satisfied, the control mode is shifted to the low altitude hovering mode, and in the low altitude hovering mode, the relative altitude Δh of the vertical take-off and landing aircraft 1 is lowered to the second relative altitude Δh2 (a predetermined relative altitude), and when the second condition including the condition that the relative position (X, Y) is within the third threshold value is satisfied as a predetermined condition, the control mode is shifted to the landing mode. Note that, as described above, the second threshold value may include the first threshold value, or may be a value that is less than or equal to the first threshold value. Similarly, the third threshold value may include the second threshold value, or may be a value less than or equal to the second threshold value.

This configuration allows the control mode to be shifted to the landing mode through the high altitude hovering mode and the low altitude hovering mode. In the high altitude hovering mode, the relative altitude Δh of the vertical take-off and landing aircraft 1 is maintained at the first relative altitude Δh1 that is higher than the second relative altitude Δh2 (a predetermined relative altitude), and when the relative position (X, Y) is within the second threshold value, the control mode is shifted to the low altitude hovering mode. Thus, the control mode can be shifted to the low altitude hovering mode in a state where the vertical take-off and landing aircraft 1 is caused to hover directly above the target landing point 2 while being temporarily maintained at the first relative altitude Δh1. Then, in the low altitude hovering mode, the vertical take-off and landing aircraft 1 is caused to descend to the second relative altitude Δh2, and when the relative position (X, Y) is within the third threshold value (a predetermined threshold value), the control mode is shifted to the landing mode. Thus, the vertical take-off and landing aircraft 1 can be shifted to the landing mode in a state where the vertical take-off and landing aircraft 1 is caused to hover directly above the target landing point 2. In this way, in the state where the vertical take-off and landing aircraft 1 is caused to hover directly above the target landing point 2, the vertical take-off and landing aircraft 1 can be stably landed by gradually changing the relative altitude Δh of the vertical take-off and landing aircraft 1 to be zero.

Additionally, the first condition and the second condition include a condition that mode transition has been instructed by an operator. That is, the first condition includes a condition that the operator has turned on the low altitude hovering mode button. Further, the second condition includes a condition that the operator has turned on the landing mode button. This configuration allows the operator to visually check whether the flight of the vertical take-off and landing aircraft 1 is stable, and then, allows the transition from the high altitude hovering mode to the low altitude hovering mode and the transition from the low altitude hovering mode to the landing mode to be performed.

The automatic landing system 100 also includes the navigation system 20 configured to acquire position coordinates of the vertical take-off and landing aircraft 1, the data transmission device 40 configured to exchange data between the vertical take-off and landing aircraft 1 and the marine vessel 5 (a facility) provided with the target landing point 2, and the guidance calculation unit 34 (a second relative-position acquisition unit) configured to calculate a relative position (X_{GPS}, Y_{GPS}) between the vertical take-off and landing aircraft 1 and the target landing point 2 based on the position coordinates of the vertical take-off and landing aircraft 1 acquired by the navigation system 20 and position coordinates of the marine vessel 5 provided with the target landing point 2 that are acquired by the data transmission device 40, wherein the plurality of control modes include the approach mode, and in the approach mode, the relative position (X_{GPS}, Y_{GPS}) acquired by the guidance calculation unit 34 is controlled to become zero, the relative altitude Δh of the vertical take-off and landing aircraft 1 is maintained so as to descend to the first relative altitude Δh1 that is higher than the second relative altitude Δh2 (a predetermined relative altitude), and when the relative position (X, Y) acquired by the image processing unit 32 and the guidance calculation unit 34 (a relative-position acquisition unit) is within the first threshold value, the control mode is shifted to the high altitude hovering mode.

With this configuration, the vertical take-off and landing aircraft 1 can be guided toward the target landing point 2 by using the relative position (X_{GPS}, Y_{GPS}) based on position coordinates obtained by using the GPS when the vertical take-off and landing aircraft 1 and the target landing point 2 are separated to the extent that the target landing point 2 cannot be captured by the camera 10. Additionally, when the target landing point 2 can be captured by the camera 10, the control mode can be shifted to the high altitude hovering mode under the condition that the relative position (X, Y) calculated by the image processing is within the first threshold value.

Furthermore, when a time period for which the marker 7 cannot be continuously captured by the camera 10 is longer than or equal to a predetermined time period during execution of each control mode, the control unit 30 (the guidance calculation unit 34) shifts the control mode to the emergency mode in which the altitude of the vertical take-off and landing aircraft 1 is raised to a predetermined altitude. This configuration allows the vertical take-off and landing aircraft 1 to be separated from the marine vessel 5 once due to the emergency mode in a case where the time period for which the marker 7 cannot be captured by the camera 10 continues for a long period and it is determined that the vertical take-off and landing aircraft 1 cannot be controlled based on the relative position (X, Y) obtained by the image processing.

Note that in the first embodiment, the approach mode button, the high altitude hovering mode button, the low altitude hovering mode button, the landing mode button, and the emergency mode button are provided on the operation display unit 90 of the marine vessel 5, and are operated by the operator of the marine vessel 5, but in a case where the vertical take-off and landing aircraft 1 is a manned aircraft, these various mode buttons may be provided in the vertical take-off and landing aircraft 1 and may be operated by a pilot.

Also in the first embodiment, the flight of the vertical take-off and landing aircraft 1 to the target landing point 2 is performed by the approach mode, but step S1 illustrated in FIG. 4 may be omitted and the vertical take-off and landing aircraft 1 may be caused to fly toward the target landing point 2 by a manual operation.

### Second Embodiment

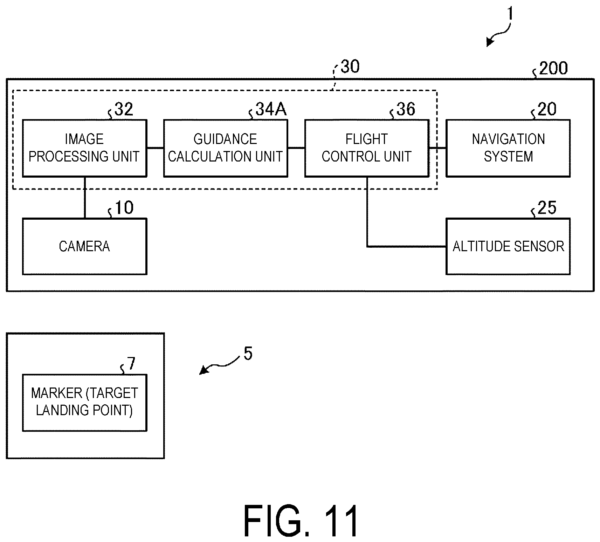

Next, an automatic landing system 200 and a landing control method for a vertical take-off and landing aircraft 1 according to a second embodiment will be described. FIG. 11 is a schematic configuration diagram illustrating an example of an automatic landing system for a vertical take-off and landing
aircraft 1 according to the second embodiment. The automatic landing system 200 according to the second embodiment is a configuration in which the data transmission device 40 is omitted from the automatic landing system 100, as illustrated in FIG. 11. In addition, the automatic landing system 200 includes a guidance calculation unit 34A in place of the guidance calculation unit 34. Other configurations of the automatic landing system 200 are similar to those of the automatic landing system 100, and thus descriptions are omitted and the same constituent elements are denoted by the same reference signs. In addition, except for that described below, the guidance calculation unit 34A has functions similar to those of the guidance calculation unit 34, and thus, descriptions of such similar functions are omitted.

Additionally, in the second embodiment, the marine vessel 5 need not include the data transmission device 80 and the operation display unit 90. Note that in FIG. 11, the navigation system 70 is omitted because exchange of data acquired by the navigation system 70 is not required between the vertical take-off and landing aircraft 1 and the marine vessel 5.

In the second embodiment, the automatic landing system 200 does not perform data communication with the marine vessel 5 side. Thus, in calculating the relative velocity, it is not possible to acquire a hull velocity from the marine vessel 5. Thus, in the second embodiment, the guidance calculation unit 34A calculates the relative velocity based on a relative position (X, Y) between the vertical take-off and landing aircraft 1 and the target landing point 2. Specifically, the guidance calculation unit 34A calculates the relative velocity by a pseudo differential of the relative position (X, Y).

Next, details of the landing control method of the second embodiment will be described. In the second embodiment, the guidance calculation unit 34A does not perform the processing of step S1 in the flowchart illustrated in FIG. 4, and causes the vertical take-off and landing aircraft 1 to approach the marine vessel 5, that is, the target landing point 2 to the extent that the marker 7 is captured in the coverage area B of the camera 10 by another method. Examples of the other method include a method in which a laser irradiation device is mounted on the vertical take-off and landing aircraft 1, laser light is emitted toward the marine vessel 5 and a reflection wave of the laser light is received on the vertical take-off and landing aircraft 1 side, whereby the relative position between the vertical take-off and landing aircraft 1 and the marine vessel 5 is
acquired and the vertical take-off and landing aircraft 1 is guided to the marine vessel 5 (target landing point 2) based on the relative position.

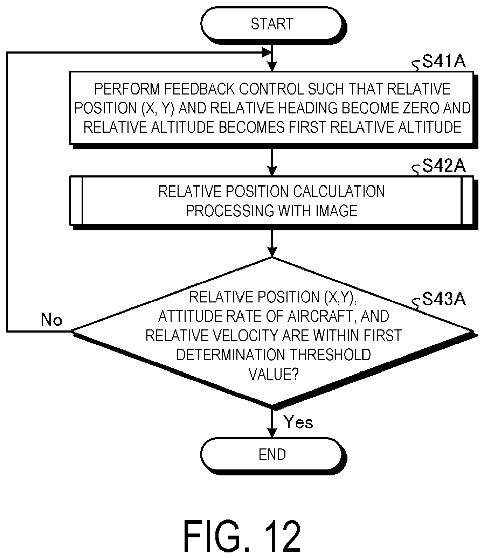

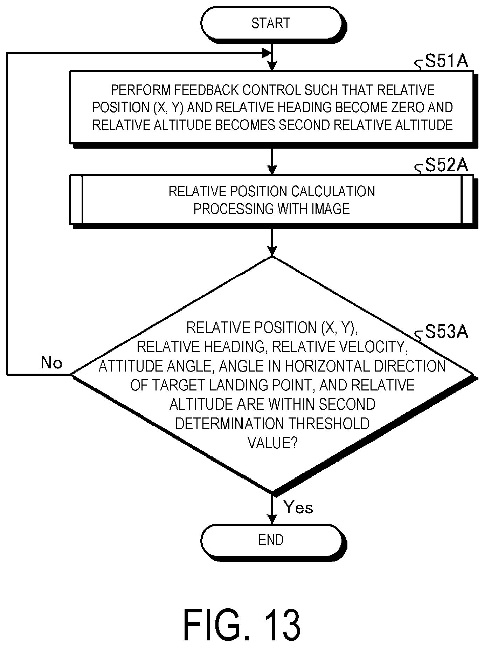

When the vertical take-off and landing aircraft 1 is sufficiently close to the marine vessel 5, that is, the target landing point 2 to the extent that the marker 7 is captured in the coverage area B of the camera 10, the guidance calculation unit 34A calculates a relative position (X, Y) by processing similar to that in step S14 in the relative position calculation processing with an image illustrated in FIG. 10 and, when the calculated relative position (X, Y) is within the first threshold value, performs the processing illustrated in FIG. 12 and FIG. 13 instead of the processing in step S2 (FIG. 7) and step S3 (FIG. 8) in FIG. 4. FIG. 12 is a flowchart illustrating an example of a processing procedure in a high altitude hovering mode according to the second embodiment. FIG. 13 is a flowchart illustrating an example of a processing procedure in a low altitude hovering mode according to the second embodiment.

The high altitude hovering mode in the second embodiment will be described with reference to FIG. 12. In step S41A and step S42A in FIG. 11, processing is similar to that in step S41 and step S42 in FIG. 7, and thus, description thereof is omitted. Note that in the second embodiment, the relative position calculation processing with an image is similar to that illustrated in FIG. 10.

As a step S43A, the guidance calculation unit 34A determines whether the relative position (X, Y) calculated in step S42A, attitude rates (in a pitch direction and a roll direction) of the vertical take-off and landing aircraft 1, and the relative velocity are within corresponding first determination threshold values. The corresponding first determination threshold value of the relative position (X, Y) is the second threshold value in the first embodiment. In addition, the corresponding first determination threshold values of the attitude rates and the relative velocity are individually set for each parameter. The first determination threshold values that correspond to the attitude rates and the relative velocity are provided in place of the condition that the operator turns on the low altitude hovering mode button in the first embodiment. Thus, the first determination threshold values that correspond to the attitude rates and the relative velocity are set to satisfy that the vertical take-off and landing aircraft 1 is considered to stably fly at the first relative altitude Δh1.

When the guidance calculation unit 34A determines that the relative position (X, Y) is not within the corresponding first determination threshold value, that is, a second threshold value (NO in step S43A), the guidance calculation unit 34A performs the processing of step S41A and subsequent steps again. Furthermore, also in a case where the guidance calculation unit 34A determines that the attitude rates and the relative velocity are not within the corresponding first determination threshold values (NO in step S43A), the guidance calculation unit 34A performs the processing of step S41A and subsequent steps again.

On the other hand, in a case where the relative position (X, Y) is within the second threshold value, and the attitude rates and the relative velocity are within the corresponding first determination threshold values (YES in step S43A), the guidance calculation unit 34A ends the high altitude hovering mode and shifts the control mode to the low altitude hovering mode. Step S43A is for determining whether a first condition for transition from the high altitude hovering mode to the low altitude hovering mode is satisfied. That is, in the second embodiment, the first condition includes, in addition to the condition that the relative position (X, Y) is within the second threshold value, a condition that the attitude rates and the relative velocity are within the corresponding first determination threshold values.

The low altitude hovering mode in the second embodiment will be described with reference to FIG. 13. Processing in step S51A and step S52A in FIG. 13 is similar to the processing in step S51 and step S52 in FIG. 8 in the first embodiment, and thus, description thereof is omitted.

The guidance calculation unit 34A determines, as a step S53A, whether the relative position (X, Y) calculated in step S52A, the attitude rates (in the pitch direction and the roll direction) of the vertical take-off and landing aircraft 1, a relative heading, a relative velocity, the attitude angles (in the pitch direction and the roll direction), angles (in the pitch direction and the roll direction) in a horizontal direction of the target landing point 2, and the relative altitude Δh are within corresponding second determination threshold values. The corresponding second determination threshold value of the relative position (X, Y) is the third threshold value in the first embodiment. Additionally, the second determination threshold value of the relative altitude Δh is the second relative altitude Δh2. The second determination threshold value of the relative altitude Δh is provided in order to automatically determine that the vertical take-off and landing aircraft 1 has descended to the second relative altitude Δh2 and is stable in the low altitude hovering mode.

Moreover, the corresponding second determination threshold values of the attitude rates of the vertical take-off and landing aircraft 1, the relative heading, the relative velocity, the attitude angles, and the angles in the horizontal direction of the target landing point 2 are individually set for each parameter. Note that the angles in the horizontal direction of the target landing point 2 are angles in the horizontal direction of the surface on which the target landing point 2 of the marine vessel 5 is provided, and can be calculated by performing image processing on an image of the marker 7 captured by the camera 10 in the image processing unit 32. The second determination threshold values corresponding to the attitude rates, the relative heading, the relative velocity, the attitude angles, and the angles in the horizontal direction of the target landing point 2 are provided instead of the condition that an operator turns on the landing mode button in the first embodiment. Thus, the second determination threshold values corresponding to the attitude rates, the relative heading, the relative velocity, the attitude angles, and the angles in the horizontal direction of the target landing point 2 are set to satisfy that the vertical take-off and landing aircraft 1 is regarded as being able to stably fly at the second relative altitude Δh2. Note that the second determination threshold values of the attitude rates and the relative velocity may be values smaller than the first determination threshold values, or may be the same values as the first determination threshold values.

When the guidance calculation unit 34A determines that the relative position (X, Y) is not within the corresponding second determination threshold value, that is, the third threshold value (NO in step S53A), the guidance calculation unit 34A executes the processing of step S51A and subsequent steps again. Additionally, when the guidance calculation unit 34A determines that the relative altitude Δh is not within the corresponding first determination threshold value, that is, the second relative altitude Δh2 (NO in step S53A), the guidance calculation unit 34A executes the processing of step S51A and subsequent steps again. Furthermore, also in a case where the guidance calculation unit 34A determines that the attitude rates, the relative heading, the relative velocity, the attitude angles, and the angles in the horizontal direction of the target landing point 2 are not within the corresponding second determination threshold values (NO in step S53A), the guidance calculation unit 34A executes the processing of step S51A and subsequent steps again.

On the other hand, when the guidance calculation unit 34A determines that the relative position (X, Y) is within the second determination threshold value, that is, the third threshold value, the relative altitude Δh is within the second relative altitude Δh2, and the attitude rates, the relative heading, the relative velocity, the attitude angles, and the angles in the horizontal direction of the target landing point 2 are within the corresponding second determination threshold values (YES in step S53A), the guidance calculation unit 34A ends the low altitude hovering mode and shifts the control mode to the landing mode. Step S53A is for determining whether a second condition (a predetermined condition) for shifting from the low altitude hovering mode to the landing mode is satisfied. That is, in the second embodiment, the second condition includes, in addition to the condition that the relative position (X, Y) is within the third threshold value, a condition that the attitude rates, the relative heading, the relative velocity, the attitude angles, the angles in the horizontal direction of the target landing point 2, and the relative altitude Δh are within the corresponding second determination threshold values.

### Operational Effects of Second Embodiment

As described above, the automatic landing system 200 for a vertical take-off and landing aircraft according to the second embodiment can calculate the relative position (X, Y) based on the marker 7 captured by the camera 10, and can calculate the relative velocity based on the relative position (X, Y). Thus, in calculating the relative position (X, Y) and the relative velocity, data communication with the marine vessel 5 side is not required. Thereby, when the vertical take-off and landing aircraft 1 is controlled based on the relative position (X, Y) and the relative velocity, the system can be simplified because data communication is not required.

Also, in the second embodiment, the first condition includes a condition that the attitude rates of the vertical take-off and landing aircraft 1 and the relative velocity are within the corresponding first determination threshold values. With this configuration, a transition instruction from an operator is not required, and the control mode can be automatically shifted from the high altitude hovering mode to the low altitude hovering mode while the vertical take-off and landing aircraft 1 is caused to stably fly. Thus, there is no need to exchange data with the marine vessel 5 when the control mode is shifted from the high altitude hovering mode to the low altitude hovering mode.

The second condition includes a condition that the attitude angles of the vertical take-off and landing aircraft 1, the attitude rates, the relative heading, the relative velocity, the angles in the horizontal direction of the target landing point 2, and the relative altitude Δh are within the corresponding second determination threshold values. With this configuration, a transition instruction from an operator is not required, and the control mode can be automatically shifted from the low altitude hovering mode to the landing mode while the vertical take-off and landing aircraft 1 is caused to stably fly. Thus, when the control mode is shifted from the low altitude hovering mode to the landing mode, there is no need to exchange data with the marine vessel 5.

### Third Embodiment

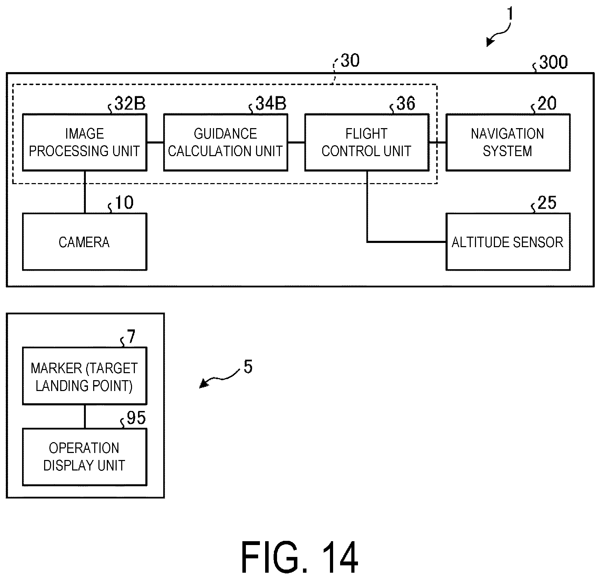

Next, an automatic landing system 300 and a landing control method for the vertical take-off and landing aircraft 1 according to a third embodiment will be described. FIG. 14 is a schematic configuration diagram illustrating an automatic landing system according to the third embodiment. As illustrated in FIG. 14, the automatic landing system 300 according to the third embodiment includes an image processing unit 32B and a guidance calculation unit 34B instead of the image processing unit 32 and the guidance calculation unit 34A of the automatic landing system 200 according to the second embodiment, respectively. Other configurations of the automatic landing system 300 are similar to those of the automatic landing system 200, and thus descriptions are omitted and the same constituent elements are denoted by the same reference signs. In addition, the image processing unit 32B and the guidance calculation unit 34B have functions similar to those of the image processing unit 32 and the guidance calculation unit 34, except for portions that will be described below, and thus, descriptions of the similar functions are omitted.

Further, in the third embodiment, the marine vessel 5 need not include the data transmission device 80 and the operation display unit 90, similarly to the second embodiment. Note that in FIG. 14, the navigation system 70 is omitted because exchange of data acquired by the navigation system 70 is not required between the vertical take-off and landing aircraft 1 and the marine vessel 5. Further, in the third embodiment, the marine vessel 5 includes an operation display unit 95 connected to the marker 7. Furthermore, in the third embodiment, the marker 7 is displayed on a display device (not illustrated) such as a liquid crystal display, and the shape of the marker is variable. The marker 7 includes at least a shape for instructing transition from the high altitude hovering mode to the low altitude hovering mode, and a shape for instructing transition from the low altitude hovering mode to the landing mode.

The image processing unit 32B performs image processing on an image captured by the camera 10 to identify the shape of the marker 7 in the image, and outputs an instruction based on the identified shape to the guidance calculation unit 34B. Specifically, in a case where the image processing unit 32B identifies that the marker 7 is shaped to instruct transition from the high altitude hovering mode to the low altitude hovering mode, the image processing unit 32B outputs a transition instruction to transition from the high altitude hovering mode to the low altitude hovering mode to the guidance calculation unit 34B. Additionally, in a case where the image processing unit 32B identifies that the marker 7 is shaped to instruct transition from the low altitude hovering mode to the landing mode, the image processing unit 32B outputs a transition instruction to transition from the low altitude hovering mode to the landing mode to the guidance calculation unit 34B.

The guidance calculation unit 34B calculates relative velocity in a manner similar to that of the guidance calculation unit 34A according to the second embodiment. As a result, as in the second embodiment, the relative velocity can be acquired without acquiring a hull velocity from the marine vessel 5.

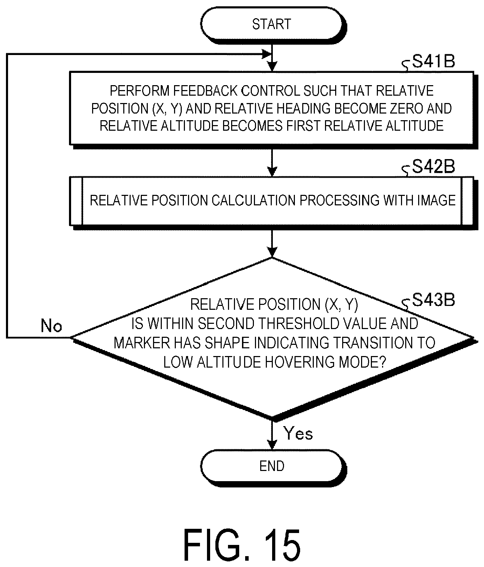

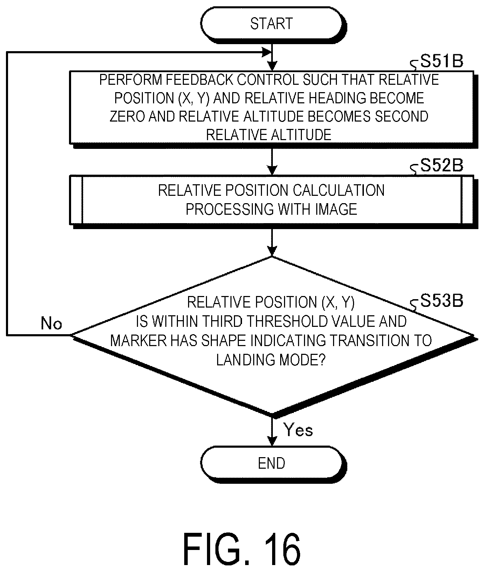

Next, a landing control method according to the third embodiment will be described. In the third embodiment, as in the second embodiment, the guidance calculation unit 34B does not perform the processing from step S1 to step S3 of the flowchart illustrated in FIG. 4, and causes the vertical take-off and landing aircraft 1 to approach the marine vessel 5, that is, the target landing point 2 to the extent that the marker 7 is captured in the coverage area B of the camera 10 by another method. Then, when the vertical take-off and landing aircraft 1 is sufficiently close to the marine vessel 5, that is, the target landing point 2 to the extent that the marker 7 is captured in the coverage area B of the camera 10, the guidance calculation unit 34B calculates a relative position (X, Y) by processing similar to that in step S14 in the relative position calculation processing with an image illustrated in FIG. 10, and when the calculated relative position (X, Y) is within a first threshold value, the guidance calculation unit 34B executes the processing illustrated in FIG. 15 and FIG. 16 instead of the processing in step S2 (FIG. 7) and step S3 (FIG. 8) in FIG. 4. FIG. 15 is a flowchart illustrating an example of a processing procedure in the high altitude hovering mode according to the third embodiment. FIG. 16 is a flowchart illustrating an example of a processing procedure in the low altitude hovering mode according to the third embodiment.

The high altitude hovering mode according to the third embodiment will be described with reference to FIG. 15. Processing in step S41B and step S42B in FIG. 15 is similar to that in step S41 and step S42 in FIG. 8, and thus, description thereof is omitted. Note that, in the third embodiment, the relative position calculation processing with an image is similar to the processing illustrated in FIG. 10.

As a step S43B, the guidance calculation unit 34B determines whether the relative position (X, Y) calculated in step S42B is within the second threshold value and whether the marker 7 is shaped to indicate transition to the low altitude hovering mode. The determination of whether the marker 7 is shaped to indicate transition to the low altitude hovering mode is provided instead of the condition that the operator turns on the low altitude hovering mode button in the first embodiment. The operator visually checks whether the vertical take-off and landing aircraft 1 can stably fly at the first relative altitude Δh1, and changes the marker 7 to have a shape indicating transition to the low altitude hovering mode by using the operation display unit 95 in the case where the vertical take-off and landing aircraft 1 can stably fly.

When the guidance calculation unit 34B determines that the relative position (X, Y) is not within the corresponding second threshold value (NO in step S43B), the guidance calculation unit 34B performs the processing of step S41B and subsequent steps again. In addition, also in a case where the guidance calculation unit 34B determines that the marker 7 does not have the shape indicating transition to the low altitude hovering mode (NO in step S43B), the guidance calculation unit 34B performs the processing of step S41B and subsequent steps again. This controls the flight of the vertical take-off and landing aircraft 1 by feedback control, as in the first embodiment, such that the relative position (X, Y) with respect to the target landing point 2 is within the second threshold value, and the first relative altitude Δh1 is maintained.

When the guidance calculation unit 34B determines that the relative position (X, Y) is within the second threshold value and the marker 7 has the shape indicating transition to the low altitude hovering mode (YES in step S43B), the guidance calculation unit 34B ends the high altitude hovering mode and shifts the control mode to the low altitude hovering mode. In the third embodiment, in step S43B, whether a first condition for the transition from the high altitude hovering mode to the low altitude hovering mode is satisfied is determined. That is, in the third embodiment, the first condition includes, in addition to the condition that the relative position (X, Y) is within the second threshold value, a condition that the marker 7 is shaped to indicate transition to the low altitude hovering mode.

The low altitude hovering mode in the third embodiment will be described with reference to FIG. 16. Processing in step S51B and step S52B in FIG. 16 is similar to the processing in step S51 and step S52 in FIG. 8 in the first embodiment, and thus, description thereof is omitted.

As a step S53B, the guidance calculation unit 34B determines whether the relative position (X, Y) calculated in the step S52B is within the third threshold value and whether the marker 7 is shaped to indicate transition to the landing mode. The determination of whether the marker 7 is shaped to indicate transition to the landing mode is provided instead of the condition that the operator turns on the landing mode button in the first embodiment. An operator visually checks whether the vertical take-off and landing aircraft 1 can stably fly at the second relative altitude Δh2, and changes the marker 7 to a shape indicating transition to the landing mode by using the operation display unit 95 in a case where the vertical take-off and landing aircraft 1 can stably fly.

When the guidance calculation unit 34B determines that the relative position (X, Y) is not within the corresponding second threshold value (NO in step S53B), the guidance calculation unit 34B performs the processing of step S51B and subsequent steps again. In addition, also in a case where the guidance calculation unit 34B determines that the marker 7 is not shaped to indicate transition to the landing mode (NO in step S53B), the guidance calculation unit 34B performs the processing of step S51B and subsequent steps again. This controls the flight of the vertical take-off and landing aircraft 1 by feedback control, as in the first embodiment, such that the relative position (X, Y) with respect to the target landing point 2 is within the third threshold value, and the second relative altitude Δh2 is maintained.

When the guidance calculation unit 34B determines that the relative position (X, Y) is within the third threshold value and the marker 7 is shaped to indicate transition to the landing mode (YES in step S53B), the guidance calculation unit 34B ends the low altitude hovering mode and shifts the control mode to the landing mode. **In** the third embodiment, in the step S53B, whether a second condition (a predetermined condition) for transitioning from the low altitude hovering mode to the landing mode is satisfied is determined. That is, in the third embodiment, the second condition includes, in addition to the condition that the relative position (X, Y) is within the third threshold value, a condition that the marker 7 is shaped to indicate transition to the landing mode.

### Operational Effects of Third Embodiment

As described above, the automatic landing system 300 of the vertical take-off and landing aircraft according to the third embodiment does not need to perform data communication with the marine vessel 5 side in calculating the relative position (X, Y) and the relative velocity. Thereby, when the vertical take-off and landing aircraft 1 is controlled based on the relative position (X, Y) and the relative velocity, the system can be simplified because data communication is not required.

In addition, in the third embodiment, the marker 7 has a variable marker shape, and the first condition and the second condition include a condition that the marker shape is a shape indicating a mode transition. This configuration allows the transition from the high altitude hovering mode to the low altitude hovering mode, and the transition from the low altitude hovering mode to the landing mode to be performed based on a change in the marker shape without receiving an instruction of the mode transition from the operator through data communication. Thus, when the transition from the high altitude hovering mode to the low altitude hovering mode, and the transition from the low altitude hovering mode to the landing mode are performed, data communication with the marine vessel 5 is not required, the mode transition can be instructed without communication, and the mode transition can be instructed even under an environment where a radio wave is shielded, for example.

Note that in the first to third embodiments, in a case where the relative altitude Δh reaches the third relative altitude Δh3 in the landing mode, the control amounts related to the attitude angles of the vertical take-off and landing aircraft 1 when the relative altitude Δh reaches the third relative altitude Δh3 are held. However, the vertical take-off and landing aircraft 1 may be caused to land on the target landing point 2 in a state in which all of the control amounts for not only the attitude angles, but also the relative position (X, Y), the relative heading, and the relative velocity are held, any of the control amounts are not held, or some of the control amounts are held.

### Reference Signs List

1 Vertical take-off and landing aircraft
2 Target landing point
5 Marine vessel
7 Marker
10 Camera
20, 70 Navigation system
25 Altitude sensor
30 Control unit
32, 32B Image processing unit
34, 34A, 34B Guidance calculation unit
36 Flight control unit
40, 80 Data transmission device
90, 95 Operation display unit
100, 200, 300 Automatic landing system

## Claims

1. A system including a marker (7) and an automatic landing system (100, 200) for a vertical take-off and landing, VTOL, aircraft (1) the system comprising: the marker (7) provided on a target landing point (2); the automatic landing system (100, 200) comprising:
an imaging device (10) configured to be mounted on the vertical take-off and landing aircraft (1);
a data transmission device (40) configured to exchange data between the vertical take-off and landing aircraft (1) and a facility (5) provided with the target landing point (2);
a position measuring unit (20) configured to acquire position coordinates of the vertical take-off and landing aircraft (1);
a guidance calculation unit (34) configured to calculate a first relative position (XGPS, YGPS) between a position of the vertical take-off and landing aircraft (1) acquired by the position measuring unit (20) and a position of the target landing point (2) based on the position coordinates of the vertical take-off and landing aircraft (1) acquired by the position measuring unit (20) and position coordinates of the facility provided with the target landing point (2) acquired by the data transmission device (40)
a relative-position acquisition unit (32, 34) configured to perform image processing on an image of the marker (7), captured by the imaging device (10), and configured to acquire a second relative position (X, Y) between the vertical take-off and landing aircraft (1) and the target landing point (2);
a relative-altitude acquisition unit (25, 34) configured to acquire a relative altitude (Δh) between the vertical take-off and landing aircraft (1) and the target landing point (2); and
a control unit (30) configured to control the vertical take-off and landing aircraft (1) in a plurality of control modes such that the second relative position (X, Y) becomes zero, wherein
the plurality of control modes includes an approach mode, a hovering mode, a landing mode, and an emergency mode,
in the approach mode, the control unit (30) is further configured to:
cause the imaging device (10) to photograph the marker (7) while causing the VTOL aircraft to fly toward the target landing point (2) so that the first relative position (XGPS, YGPS) is within a predetermined range;
determine whether the first relative position is within the predetermined range and the second relative position which has been acquired is within a first threshold value; and
shift the control mode to the hovering mode if the first relative position is within the predetermined range and the second relative position which has been acquired is determined to be within the first threshold value,
the hovering mode is executed within a first threshold value at which the second relative position (X, Y) is within a range of the target landing point (2), the relative altitude (Δh) of the vertical take-off and landing aircraft (1) is lowered to a predetermined relative altitude (Δh2) in the hovering mode with a first descent rate, and when a predetermined condition including a condition that the second relative position (X, Y) is within a predetermined threshold value that is less than the first threshold value is satisfied, the control mode is shifted from the hovering mode to the landing mode,
when a time period for which the marker cannot be captured by the imaging device continues longer than or equal to a predetermined time period during execution of the hovering mode, the processor shifts the control mode to an emergency mode in which an altitude of the vertical take off and landing aircraft is raised to a predetermined altitude, and
in the landing mode, the vertical take-off and landing aircraft (1) descends at a constant and at a second descent rate that is larger than the first descent rate until it reaches a first relative altitude (Δh3) that is lower than the predetermined relative altitude (Δh2), and the relative altitude (Δh) of the vertical take-off and landing aircraft (1) is further lowered to land the vertical take-off and landing aircraft (1) on the target landing point (2).

2. The system including a marker (7) and an automatic landing system (100, 200) for vertical take-off and landing aircraft (1) according to claim 1, wherein the automatic landing system 100, 200) further comprises:
a relative-velocity acquisition unit (34) configured to acquire a relative velocity between the vertical take-off and landing aircraft (1) and the target landing point (2), wherein
the control unit (30) is configured to control the vertical take-off and landing aircraft (1) in a plurality of control modes such that the relative velocity is within a predetermined velocity.

3. The system including a marker (7) and an automatic landing system (100, 200) for vertical take-off and landing aircraft (1) according to claim 1 or 2, wherein
in the landing mode, when the relative altitude (Δh) is less than or equal to a predetermined value (Δh3), the vertical take-off and landing aircraft (1) is caused to descend without changing an attitude angle of the vertical take-off and landing aircraft (1).

4. The system including the marker (7) and the automatic landing system (100, 200) for vertical take-off and landing aircraft (1) according to any one of claims 1 to 3, wherein
the hovering mode includes a high altitude hovering mode and a low altitude hovering mode,
in the high altitude hovering mode, the relative altitude (Δh) of the vertical take-off and landing aircraft (1) is maintained at a second relative altitude that is higher than the predetermined relative altitude (Δh2), and when a first condition including a condition that the relative position (X, Y) is within a second threshold value is satisfied, the control mode is shifted to the low altitude hovering mode, and
in the low altitude hovering mode, the relative altitude (Δh) of the vertical take-off and landing aircraft (1) is lowered to the predetermined relative altitude (Δh2), and when a second condition as the predetermined condition including a condition that the relative position (X, Y) is within the predetermined threshold value is satisfied, the control mode is shifted to the landing mode.

5. The system including a marker (7) and an automatic landing system (100, 200) for vertical take-off and landing aircraft (1) according to claim 4, wherein
the first condition and the second condition include a condition that a mode transition is instructed by an operator.

6. The system including a marker (7) and an automatic landing system (100, 200) for vertical take-off and landing aircraft (1) according to claim 4, wherein
the first condition includes a condition that an attitude rate of the vertical take-off and landing aircraft (1) and a relative velocity between the vertical take-off and landing aircraft (1) and the target landing point (2) are within corresponding first determination threshold values.

7. The system including a marker (7) and an automatic landing system (100, 200) for vertical take-off and landing aircraft (1) according to claim 4 or 6, wherein
the second condition includes a condition that an attitude angle of the vertical take-off and landing aircraft (1), an attitude rate, a relative velocity between the vertical take-off and landing aircraft (1) and the target landing point (2), an angle in a horizontal direction of the target landing point (2), and the relative altitude (Δh) are within corresponding second determination threshold values.

8. The system including a marker (7) and an automatic landing system (100, 200) for vertical take-off and landing aircraft (1) according to claim 4, wherein
the marker (7) has a marker shape being variable, and
the first condition and the second condition include a condition that the marker shape is a shape indicating a mode transition.

9. The system including a marker and an automatic landing system for a vertical take-off and landing aircraft according to any one of claims 1 to 9, further comprising the vertical take-off and landing aircraft (1) including the automatic landing system (100, 200).

10. A landing control method for a system including a marker (7) and an automatic landing system (100, 200) for a vertical take-off and landing aircraft (1), the method comprising:
performing image processing, by a relative-position acquisition unit (32, 34), on an image, of a marker (7) provided to a target landing point (2), captured by an imaging device (10) mounted on the vertical take-off and landing aircraft (1), and acquiring a relative position (X, Y) between the vertical take-off and landing aircraft (1) and the target landing point (2);
exchanging data via data transmission devices (40, 80) between the vertical take-off and landing aircraft (1) and a facility (5) provided with the target landing point (2);
acquiring position coordinates of the vertical take-off and landing aircraft (1), via a position measuring unit (20);
calculating a first relative position (XGPS, YGPS) between a position of the vertical take-off and landing aircraft (1) acquired by the position measuring unit (20) and a position of the target landing point (2) based on the position coordinates of the vertical take-off and landing aircraft (1) acquired by the position measuring unit (20) and position coordinates of the facility provided with the target landing point (2) acquired by the data transmission device (40),
acquiring, by a relative-altitude acquisition unit (25, 34), a second relative altitude (Δh) between the vertical take-off and landing aircraft (1) and the target landing point (2); and
controlling, by a control unit (30), the vertical take-off and landing aircraft (1) in a plurality of control modes such that the second relative position (X, Y) becomes zero, wherein
the plurality of control modes includes an approach mode, a hovering mode, a landing mode, and an emergency mode,
the hovering mode is executed within a first threshold value at which the second relative position (X, Y) is within a range of the target landing point (2), the relative altitude (Δh) of the vertical take-off and landing aircraft (1) is lowered to a predetermined relative altitude (Δh2) in the hovering mode with a first descent rate, and when a predetermined condition including a condition that the second relative position (X, Y) is within a predetermined threshold value that is less than the first threshold value is satisfied, the control mode is shifted from the hovering mode to the landing mode,
when a time period for which the marker cannot be captured by the imaging device continues longer than or equal to a predetermined time period during execution of the hovering mode, shifing the control mode to an emergency mode in which an altitude of the vertical take off and landing aircraft is raised to a predetermined altitude, and
in the landing mode, the relative altitude (Δh) of the vertical take-off and landing aircraft (1) descending at a constant and at a second descent rate that is larger than the first descent rate until it reaches a first relative altitude (Δh3) that is lower than the predetermined relative altitude (Δh2), and is further lowered to land the vertical take-off and landing aircraft (1) on the target landing point (2).

## Patentansprüche

1. System, das einen Marker (7) und ein automatisches Landesystem (100, 200) für ein vertikal startendes und landendes, VTOL, Flugzeug (1) einschließt, wobei das System Folgendes umfasst:
den Marker (7), der an einem Ziel-Landepunkt (2) bereitgestellt ist; wobei das automatische Landesystem (100, 200) Folgendes umfasst:
eine Bildgebungsvorrichtung (10), die so ausgebildet ist, dass sie auf dem vertikal startenden und landenden Flugzeug (1) montiert werden kann:
eine Datenübertragungsvorrichtung (40), die so ausgebildet ist, dass sie Daten zwischen dem vertikal startenden und landenden Flugzeug (1) und einer mit dem Ziel-Landepunkt (2) bereitgestellten Anlage (5) austauscht;
eine Positionsmesseinheit (20), die so ausgebildet ist, dass sie Positionskoordinaten des vertikal startenden und landenden Flugzeugs (1) erfasst;
eine Führungsberechnungseinheit (34), die so ausgebildet ist, dass sie eine erste relative Position (XGPS, YGPS) zwischen einer Position des vertikal startenden und landenden Flugzeugs (1), die von der Positionsmesseinheit (20) erfasst wurde, und einer Position des Ziel-Landepunkts (2) basierend auf den Positionskoordinaten des vertikal startenden und landenden Flugzeugs (1), die von der Positionsmesseinheit (20) erfasst wurden, und von Positionskoordinaten der Anlage, die mit dem Ziel-Landepunkt (2) bereitgestellt ist, der von der Datenübertragungsvorrichtung (40) erfasst wurde, berechnet
eine Erfassungseinheit (32, 34) der relativen Position, die so ausgebildet ist, dass sie Bildverarbeitung an einem Bild des Markers (7), das von der Bildgebungsvorrichtung (10) erfasst wurde, durchführt, und die so ausgebildet ist, dass sie eine zweite relative Position (X, Y) zwischen dem vertikal startenden und landenden Flugzeug (1) und dem Ziel-Landepunkt (2) erfasst;
eine Erfassungseinheit (25, 34) der relativen Höhe, die so ausgebildet ist, dass sie eine relative Höhe (Δh) zwischen dem vertikal startenden und landenden Flugzeug (1) und dem Ziel-Landepunkt (2) erfasst; und
eine Steuereinheit (30), die so ausgebildet ist, dass sie das vertikal startende und landende Flugzeug (1) in einer Vielzahl von Steuermodi derart steuert, dass die zweite relative Position (X, Y) null wird, wobei
die Vielzahl von Steuermodi einen Anflugmodus, einen Schwebemodus, einen Landemodus und einen Notfallmodus einschließt,
wobei im Anflugmodus die Steuereinheit (30) weiter so ausgebildet ist, dass sie:
bewirkt, dass die Bildgebungsvorrichtung (10) den Marker (7) fotografiert, während sie bewirkt, dass das VTOL-Flugzeug auf den Ziel-Landepunkt (2) zufliegt, sodass die erste relative Position (XGPS, YGPS) innerhalb eines vorbestimmten Bereichs liegt;
bestimmt, ob die erste relative Position innerhalb des vorbestimmten Bereichs liegt und die zweite relative Position, die erfasst wurde, innerhalb eines ersten Schwellenwerts liegt; und
den Steuermodus in den Schwebemodus umstellt, wenn die erste relative Position innerhalb des vorbestimmten Bereichs liegt und für die zweite relative Position, die erfasst wurde, bestimmt ist, dass sie innerhalb des ersten Schwellenwerts liegt,
wobei der Schwebemodus innerhalb eines ersten Schwellenwerts ausgeführt wird, bei dem die zweite relative Position (X, Y) innerhalb eines Bereichs des Ziel-Landepunkts (2) liegt, wobei die relative Höhe (Δh) des vertikal startenden und landenden Flugzeugs (1) auf eine vorbestimmte relative Höhe (Δh2) im Schwebemodus mit einer ersten Absinkgeschwindigkeit abgesenkt wird, und wenn eine vorbestimmte Bedingung, die eine Bedingung einschließt, dass die zweite relative Position (X, Y) innerhalb eines vorbestimmten Schwellenwerts liegt, der weniger ist als der erste Schwellenwert, erfüllt ist, der Steuermodus vom Schwebemodus in den Landemodus umgestellt wird,
wenn eine Zeitdauer, in der der Marker von der Bildgebungsvorrichtung nicht aufgenommen werden kann, weiterhin länger oder gleich lang wie eine vorbestimmte Zeitdauer während Ausführung des Schwebemodus ist, der Prozessor den Steuermodus in einen Notfallmodus umstellt, in dem eine Höhe des vertikal startenden und landenden Flugzeugs auf eine vorbestimmte Höhe angehoben wird, und
im Landemodus das vertikal startende und landende Flugzeug (1) mit einer konstanten und einer zweiten Absinkgeschwindigkeit, die größer ist als die erste Absinkgeschwindigkeit, absinkt, bis es eine erste relative Höhe (Δh3) erreicht, die niedriger ist als die vorbestimmte relative Höhe (Δh2), und die relative Höhe (Δh) des vertikal startenden und landenden Flugzeugs (1) weiter abgesenkt wird, um das vertikal startende und landende Flugzeug (1) auf dem Ziel-Landepunkt (2) zu landen.

2. System, das einen Marker (7) und ein automatisches Landesystem (100, 200) für ein vertikal startendes und landendes Flugzeug (1) einschließt, nach Anspruch 1, wobei das automatische Landesystem 100, 200) weiter Folgendes umfasst:
eine Erfassungseinheit (34) der relativen Geschwindigkeit, die so ausgebildet ist, dass sie eine relative Geschwindigkeit zwischen dem vertikal startenden und landenden Flugzeug (1) und dem Ziel-Landepunkt (2) erfasst, wobei
die Steuereinheit (30) so ausgebildet ist, dass sie das vertikal startende und landende Flugzeug (1) in einer Vielzahl von Steuermodi derart steuert, dass die relative Geschwindigkeit innerhalb einer vorbestimmten Geschwindigkeit liegt.

3. System, das einen Marker (7) und ein automatisches Landesystem (100, 200) für ein vertikal startendes und landendes Flugzeug (1) einschließt, nach Anspruch 1 oder 2, wobei
im Landemodus, wenn die relative Höhe (Δh) weniger oder gleich groß ist wie ein vorbestimmter Wert (Δh3), bewirkt wird, dass das vertikal startende und landende Flugzeug (1), ohne einen Fluglagewinkel des vertikal startenden und landenden Flugzeugs (1) zu verändern, absinkt.

4. System, das den Marker (7) und das automatische Landesystem (100, 200) für ein vertikal startendes und landendes Flugzeug (1) einschließt, nach einem der Ansprüche 1 bis 3, wobei
der Schwebemodus einen Schwebemodus in hoher Höhe und einen Schwebemodus in niedriger Höhe einschließt,
im Schwebemodus in hoher Höhe die relative Höhe (Δh) des vertikal startenden und landenden Flugzeugs (1) auf einer zweiten relativen Höhe gehalten wird, die höher ist als die vorbestimmte relative Höhe (Δh2), und wenn eine erste Bedingung, die eine Bedingung einschließt, dass die relative Position (X, Y) innerhalb eines zweiten Schwellenwerts liegt, erfüllt ist, der Steuermodus in den Schwebemodus in niedriger Höhe umgestellt wird, und
im Schwebemodus in niedriger Höhe die relative Höhe (Δh) des vertikal startenden und landenden Flugzeugs (1) auf die vorbestimmte relative Höhe (Δh2) abgesenkt wird, und wenn eine zweite Bedingung als die vorbestimmte Bedingung, die eine Bedingung einschließt, dass die relative Position (X, Y) innerhalb des vorbestimmten Schwellenwerts liegt, erfüllt ist, der Steuermodus in den Landemodus umgestellt wird.

5. System, das einen Marker (7) und ein automatisches Landesystem (100, 200) für ein vertikal startendes und landendes Flugzeug (1) einschließt, nach Anspruch 4, wobei
die erste Bedingung und die zweite Bedingung eine Bedingung einschließen, dass ein Modusübergang von einem Bediener angewiesen wird.

6. System, das einen Marker (7) und ein automatisches Landesystem (100, 200) für ein vertikal startendes und landendes Flugzeug (1) einschließt, nach Anspruch 4, wobei
die erste Bedingung eine Bedingung einschließt, dass eine Fluglagenrate des vertikal startenden und landenden Flugzeugs (1) und eine relative Geschwindigkeit zwischen dem vertikal startenden und landenden Flugzeug (1) und dem Ziel-Landepunkt (2) innerhalb von entsprechenden ersten Bestimmungsschwellenwerten liegen.

7. System, das einen Marker (7) und ein automatisches Landesystem (100, 200) für ein vertikal startendes und landendes Flugzeug (1) einschließt, nach Anspruch 4 oder 6, wobei
die zweite Bedingung eine Bedingung einschließt, dass ein Fluglagewinkel des vertikal startenden und landenden Flugzeugs (1), eine Fluglagenrate, eine relative Geschwindigkeit zwischen dem vertikal startenden und landenden Flugzeug (1) und dem Ziel-Landepunkt (2), ein Winkel in einer horizontalen Richtung des Ziel-Landepunkts (2) und die relative Höhe (Δh) innerhalb von entsprechenden zweiten Bestimmungsschwellenwerten liegen.

8. System, das einen Marker (7) und ein automatisches Landesystem (100, 200) für ein vertikal startendes und landendes Flugzeug (1) einschließt, nach Anspruch 4, wobei
der Marker (7) eine Markerform aufweist, die variabel ist, und
die erste Bedingung und die zweite Bedingung eine Bedingung einschließen, dass die Markerform eine Form ist, die einen Modusübergang angibt.

9. System, das einen Marker und ein automatisches Landesystem für ein vertikal startendes und landendes Flugzeug einschließt, nach einem der Ansprüche 1 bis 9, weiter umfassend das vertikal startende und landende Flugzeug (1), das das automatische Landesystem (100, 200) einschließt.

10. Steuerverfahren zur Landung für ein System, das einen Marker (7) und ein automatisches Landesystem (100, 200) für ein vertikal startendes und landendes Flugzeug (1) einschließt, wobei das Verfahren Folgendes umfasst:
Durchführen von Bildverarbeitung durch eine Erfassungseinheit (32, 34) der relativen Position an einem Bild eines Markers (7), der einem Ziel-Landepunkt (2) bereitgestellt ist, der von einer Bildgebungsvorrichtung (10) aufgenommen wurde, die auf dem vertikal startenden und landenden Flugzeug (1) montiert ist, und Erfassen einer relativen Position (X, Y) zwischen dem vertikal startenden und landenden Flugzeug (1) und dem Ziel-Landepunkt (2);
Austauschen von Daten über Datenübertragungsvorrichtungen (40, 80) zwischen dem vertikal startenden und landenden Flugzeug (1) und einer mit dem Ziel-Landepunkt (2) bereitgestellten Anlage (5);
Erfassen von Positionskoordinaten des vertikal startenden und landenden Flugzeugs (1) über eine Positionsmesseinheit (20);
Berechnen einer ersten relativen Position (XGPS, YGPS) zwischen einer Position des vertikal startenden und landenden Flugzeugs (1), die von der Positionsmesseinheit (20) erfasst wurde, und einer Position des Ziel-Landepunkts (2) basierend auf den Positionskoordinaten des vertikal startenden und landenden Flugzeugs (1), die von der Positionsmesseinheit (20) erfasst wurden, und von Positionskoordinaten der Anlage, die mit dem Ziel-Landepunkt (2) bereitgestellt ist, die von der Datenübertragungsvorrichtung (40) erfasst wurden,
Erfassen durch eine Erfassungseinheit der relativen Höhe (25, 34) einer zweiten relativen Höhe (Δh) zwischen dem vertikal startenden und landenden Flugzeug (1) und dem Ziel-Landepunkt (2); und
Steuern durch eine Steuereinheit (30) des vertikal startenden und landenden Flugzeugs (1) in einer Vielzahl von Steuermodi, derart, dass die zweite relative Position (X, Y) null wird, wobei
die Vielzahl von Steuermodi einen Anflugmodus, einen Schwebemodus, einen Landemodus und einen Notfallmodus einschließt,
wobei der Schwebemodus innerhalb eines ersten Schwellenwerts ausgeführt wird, bei dem die zweite relative Position (X, Y) innerhalb eines Bereichs des Ziel-Landepunkts (2) liegt,
wobei die relative Höhe (Δh) des vertikal startenden und landenden Flugzeugs (1) auf eine vorbestimmte relative Höhe (Δh2) im Schwebemodus mit einer ersten Absinkgeschwindigkeit abgesenkt wird, und wenn eine vorbestimmte Bedingung, die eine Bedingung einschließt, dass die zweite relative Position (X, Y) innerhalb eines vorbestimmten Schwellenwerts liegt, der weniger ist als der erste Schwellenwert, erfüllt ist, der Steuermodus vom Schwebemodus in den Landemodus umgestellt wird,
wenn eine Zeitdauer, in der der Marker von der Bildgebungsvorrichtung nicht aufgenommen werden kann, weiterhin länger oder gleich lang ist wie eine vorbestimmte Zeitdauer während Ausführung des Schwebemodus, Umstellen des Steuermodus in einen Notfallmodus, in dem eine Höhe des vertikal startenden und landenden Flugzeugs auf eine vorbestimmte Höhe angehoben wird, und
im Landemodus, Absenken der relativen Höhe (Δh) des vertikal startenden und landenden Flugzeugs (1) mit einer konstanten und einer zweiten Absinkgeschwindigkeit, die größer ist als die erste Absinkgeschwindigkeit, bis es eine erste relative Höhe (Δh3) erreicht, die niedriger ist als die vorbestimmte relative Höhe (Δh2), und weiter abgesenkt wird, um das vertikal startende und landende Flugzeug (1) auf dem Ziel-Landepunkt (2) zu landen.

## Revendications

1. Système incluant un marqueur (7) et un système (100, 200) d'atterrissage automatique pour un aéronef (1) à décollage/atterrissage vertical, VTOL, le système comprenant :
le marqueur (7) prévu sur un point (2) d'atterrissage cible ; le système (100, 200) d'atterrissage automatique comprenant :
un dispositif d'imagerie (10) configuré pour être monté sur l'aéronef (1) à décollage/atterrissage vertical :
un dispositif (40) de transmission de données configuré pour échanger des données entre l'aéronef (1) à décollage/atterrissage vertical et une installation (5) prévue avec le point d'atterrissage cible (2) ;
une unité (20) de mesure de position configurée pour acquérir des coordonnées de position de l'aéronef (1) à décollage/atterrissage vertical ;
une unité (34) de calcul de guidage configurée pour calculer une première position relative (XGPS, YGPS) entre une position de l'aéronef (1) à décollage/atterrissage vertical acquise par l'unité (20) de mesure de position et une position du point d'atterrissage cible (2) sur la base des coordonnées de position de l'aéronef (1) à décollage/atterrissage vertical acquises par l'unité (20) de mesure de position et des coordonnées de position de l'installation prévue avec le point d'atterrissage cible (2) acquises par le dispositif (40) de transmission de données
une unité (32, 34) d'acquisition de position relative configurée pour réaliser un traitement d'image sur une image du marqueur (7), capturée par le dispositif d'imagerie (10), et configurée pour acquérir une deuxième position relative (X, Y) entre l'aéronef (1) à décollage/atterrissage vertical et le point d'atterrissage cible (2) ;
une unité (25, 34) d'acquisition d'altitude relative configurée pour acquérir une altitude relative (Δh) entre l'aéronef (1) à décollage/atterrissage vertical et le point d'atterrissage cible (2) ; et
une unité de commande (30) configurée pour commander l'aéronef (1) à décollage/atterrissage vertical dans une pluralité de modes de commande de sorte que la deuxième position relative (X, Y) devienne nulle, dans lequel
la pluralité de modes de commande inclut un mode d'approche, un mode de vol stationnaire, un mode d'atterrissage et un mode d'urgence,
dans le mode d'approche, l'unité de commande (30) est en outre configurée pour :
amener le dispositif d'imagerie (10) à photographier le marqueur (7) tout en amenant l'aéronef VTOL à voler vers le point d'atterrissage cible (2) de sorte que la première position relative (XGPS, YGPS) soit dans une plage prédéterminée ;
déterminer si la première position relative se trouve dans la plage prédéterminée et si la deuxième position relative qui a été acquise se trouve dans une première valeur de seuil ; et
commuter le mode de commande dans le mode de vol stationnaire si la première position relative se trouve dans la plage prédéterminée et si la deuxième position relative qui a été acquise est déterminée comme se trouvant dans la première valeur de seuil,
le mode de vol stationnaire est exécuté dans une première valeur de seuil à laquelle la deuxième position relative (X, Y) se trouve dans une plage du point d'atterrissage cible (2), l'altitude relative (Δh) de l'aéronef (1) à décollage/atterrissage vertical est abaissée jusqu'à une altitude relative prédéterminée (Δh2) dans le mode de vol stationnaire avec un premier taux de descente, et lorsqu'une condition prédéterminée incluant une condition selon laquelle la deuxième position relative (X, Y) se trouve dans une valeur de seuil prédéterminée qui est inférieure à la première valeur de seuil est satisfaite, le mode de commande est commuté du mode de vol stationnaire au mode d'atterrissage,
lorsqu'une période de temps pendant laquelle le marqueur ne peut pas être capturé par le dispositif d'imagerie se poursuit plus longtemps qu'une période de temps prédéterminée ou pendant une durée égale à celle-ci au cours de l'exécution du mode de vol stationnaire, le processeur commute le mode de commande dans un mode d'urgence dans lequel une altitude de l'aéronef à décollage/atterrissage vertical est relevée jusqu'à une altitude prédéterminée, et
dans le mode d'atterrissage, l'aéronef (1) à décollage/atterrissage vertical descend à un taux constant et à un deuxième taux de descente qui est supérieur au premier taux de descente jusqu'à ce qu'il atteigne une première altitude relative (Δh3) qui est inférieure à l'altitude relative prédéterminée (Δh2), et l'altitude relative (Δh) de l'aéronef (1) à décollage/atterrissage vertical est en outre abaissée pour faire atterrir l'aéronef (1) à décollage/atterrissage vertical sur le point d'atterrissage cible (2).

2. Système incluant un marqueur (7) et un système (100, 200) d'atterrissage automatique pour un aéronef (1) à décollage/atterrissage vertical selon la revendication 1, dans lequel le système (100, 200) d'atterrissage automatique comprend en outre :
une unité (34) d'acquisition de vitesse relative configurée pour acquérir une vitesse relative entre l'aéronef (1) à décollage/atterrissage vertical et le point d'atterrissage cible (2), dans lequel
l'unité de commande (30) est configurée pour commander l'aéronef (1) à décollage/atterrissage vertical dans une pluralité de modes de commande de sorte que la vitesse relative se trouve dans une vitesse prédéterminée.

3. Système incluant un marqueur (7) et un système (100, 200) d'atterrissage automatique pour un aéronef (1) à décollage/atterrissage vertical selon la revendication 1 ou la revendication 2, dans lequel
dans le mode d'atterrissage, lorsque l'altitude relative (Δh) est inférieure ou égale à une valeur prédéterminée (Δh3), l'aéronef (1) à décollage/atterrissage vertical est amené à descendre sans changer un angle d'assiette de l'aéronef (1) à décollage/atterrissage vertical.

4. Système incluant le marqueur (7) et le système (100, 200) d'atterrissage automatique pour un aéronef (1) à décollage/atterrissage vertical selon l'une quelconque des revendications 1 à 3, dans lequel
le mode de vol stationnaire inclut un mode de vol stationnaire à haute altitude et un mode de vol stationnaire à basse altitude,
dans le mode de vol stationnaire à haute altitude, l'altitude relative (Δh) de l'aéronef (1) à décollage/atterrissage vertical est maintenue à une deuxième altitude relative qui est supérieure à l'altitude relative prédéterminée (Δh2), et lorsqu'une première condition incluant une condition selon laquelle la position relative (X, Y) se trouve dans une deuxième valeur de seuil est satisfaite, le mode de commande est commuté dans le mode de vol stationnaire à basse altitude, et
dans le mode de vol stationnaire à basse altitude, l'altitude relative (Δh) de l'aéronef (1) à décollage/atterrissage vertical est abaissée jusqu'à l'altitude relative prédéterminée (Δh2), et lorsqu'une deuxième condition en tant que condition prédéterminée incluant une condition selon laquelle la position relative (X, Y) se trouve dans la valeur de seuil prédéterminée est satisfaite, le mode de commande est commuté dans le mode d'atterrissage.

5. Système incluant un marqueur (7) et un système (100, 200) d'atterrissage automatique pour un aéronef (1) à décollage/atterrissage vertical selon la revendication 4, dans lequel
la première condition et la deuxième condition incluent une condition selon laquelle une transition de mode est ordonnée par un opérateur.

6. Système incluant un marqueur (7) et un système (100, 200) d'atterrissage automatique pour un aéronef (1) à décollage/atterrissage vertical selon la revendication 4, dans lequel
la première condition inclut une condition selon laquelle une variation d'assiette de l'aéronef (1) à décollage/atterrissage vertical et une vitesse relative entre l'aéronef (1) à décollage/atterrissage vertical et le point d'atterrissage cible (2) se trouvent dans des premières valeurs de seuil de détermination correspondantes.

7. Système incluant un marqueur (7) et un système (100, 200) d'atterrissage automatique pour un aéronef (1) à décollage/atterrissage vertical selon la revendication 4 ou la revendication 6, dans lequel
la deuxième condition inclut une condition selon laquelle un angle d'assiette de l'aéronef (1) à décollage/atterrissage vertical, une variation d'assiette, une vitesse relative entre l'aéronef (1) à décollage/atterrissage vertical et le point d'atterrissage cible (2), un angle dans une direction horizontale du point d'atterrissage cible (2), et l'altitude relative (Δh) se trouvent dans des deuxièmes valeurs de seuil de détermination correspondantes.

8. Système incluant un marqueur (7) et un système (100, 200) d'atterrissage automatique pour un aéronef (1) à décollage/atterrissage vertical selon la revendication 4, dans lequel
le marqueur (7) présente une forme de marqueur variable, et
la première condition et la deuxième condition incluent une condition selon laquelle la forme de marqueur est une forme indiquant une transition de mode.

9. Système incluant un marqueur et un système d'atterrissage automatique pour un aéronef à décollage/atterrissage vertical selon l'une quelconque des revendications 1 à 9, comprenant en outre l'aéronef (1) à décollage/atterrissage vertical incluant le système (100, 200) d'atterrissage automatique.

10. Procédé de commande d'atterrissage pour un système incluant un marqueur (7) et un système (100, 200) d'atterrissage automatique pour un aéronef (1) à décollage/atterrissage vertical, le procédé comprenant :
la réalisation d'un traitement d'image, par une unité (32, 34) d'acquisition de position relative, sur une image, d'un marqueur (7) prévu sur un point d'atterrissage cible (2), capturée par un dispositif d'imagerie (10) monté sur l'aéronef (1) à décollage/atterrissage vertical, et l'acquisition d'une position relative (X, Y) entre l'aéronef (1) à décollage/atterrissage vertical et le point d'atterrissage cible (2) ;
l'échange de données par l'intermédiaire de dispositifs (40, 80) de transmission de données entre l'aéronef (1) à décollage/atterrissage vertical et une installation (5) prévue avec le point d'atterrissage cible (2) ;
l'acquisition de coordonnées de position de l'aéronef (1) à décollage/atterrissage vertical, par l'intermédiaire d'une unité (20) de mesure de position ;
le calcul d'une première position relative (XGPS, YGPS) entre une position de l'aéronef (1) à décollage/atterrissage vertical acquise par l'unité (20) de mesure de position et une position du point d'atterrissage cible (2) sur la base des coordonnées de position de l'aéronef (1) à décollage/atterrissage vertical acquises par l'unité (20) de mesure de position et des coordonnées de position de l'installation prévue avec le point d'atterrissage cible (2) acquises par le dispositif (40) de transmission de données,
l'acquisition, par une unité (25, 34) d'acquisition d'altitude relative, d'une deuxième altitude relative (Δh) entre l'aéronef (1) à décollage/atterrissage vertical et le point d'atterrissage cible (2) ; et
la commande, par une unité de commande (30), de l'aéronef (1) à décollage/atterrissage vertical dans une pluralité de modes de commande de sorte que la deuxième position relative (X, Y) devienne nulle, dans lequel
la pluralité de modes de commande inclut un mode d'approche, un mode de vol stationnaire, un mode d'atterrissage et un mode d'urgence,
le mode de vol stationnaire est exécuté dans une première valeur de seuil à laquelle la deuxième position relative (X, Y) se trouve dans une plage du point d'atterrissage cible (2), l'altitude relative (Δh) de l'aéronef (1) à décollage/atterrissage vertical est abaissée jusqu'à une altitude relative prédéterminée (Δh2) dans le mode de vol stationnaire avec un premier taux de descente, et lorsqu'une condition prédéterminée incluant une condition selon laquelle la deuxième position relative (X, Y) se trouve dans une valeur de seuil prédéterminée qui est inférieure à la première valeur de seuil est satisfaite, le mode de commande est commuté du mode de vol stationnaire au mode d'atterrissage,
lorsqu'une période de temps pendant laquelle le marqueur ne peut pas être capturé par le dispositif d'imagerie se poursuit plus longtemps qu'une période de temps prédéterminée ou pendant une durée égale à celle-ci au cours de l'exécution du mode de vol stationnaire, la commutation du mode de commande dans un mode d'urgence dans lequel une altitude de l'aéronef à décollage/atterrissage vertical est relevée jusqu'à une altitude prédéterminée, et
dans le mode d'atterrissage, l'altitude relative (Δh) de l'aéronef (1) à décollage/atterrissage vertical descendant à un taux constant et à un deuxième taux de descente qui est supérieur au premier taux de descente jusqu'à ce qu'elle atteigne une première altitude relative (Δh3) qui est inférieure à l'altitude relative prédéterminée (Δh2), et est en outre abaissée pour faire atterrir l'aéronef (1) à décollage/atterrissage vertical sur le point d'atterrissage cible (2).
